# EUROPEAN PATENT APPLICATION

(11) **EP 4 804 690 A1**
(43) Date of publication of application: **09.09.2026**
(21) Application number: 23957226.6
(22) Date of filing: 01.11.2023
(51) Int. Cl.: H04W 72/232, H04W 72/231, H04W 72/20, H04W 52/02, H04W 48/08

(54) **CHANNEL OR SIGNAL TRANSMISSION METHOD, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Penza, Giancarlo
(86) International application number: PCT/CN2023/129181
(87) International publication number: WO 2025/091353

(57) **Abstract**

Embodiments of the present application provide a channel or signal transmission method, a device, and a storage medium. The method comprises: a terminal device acquires one or more pieces of configuration information, the one or more pieces of configuration information comprising first resource configuration information, and the first resource configuration information being used for configuring a resource for transmitting a common channel or signal on a first cell; and the terminal device receives first indication information, the first indication information being used for determining the resource used for transmitting the common channel or signal on the first cell.

## Description

### TECHNICAL FIELD

Embodiments of the present application relates to the technical field of mobile communications, and particularly to a method for channel or signal transmission, a device and a storage medium.

### BACKGROUND

In New Radio (NR) systems, the initial access procedure of a terminal device can be completed by detecting Synchronization Signal/PBCH blocks (SSBs or SS/PBCH blocks) on synchronization raster(s). The SSBs are transmitted through a Discovery Burst Transmission Window or an SSB transmission opportunity window. A Type0-Physical Downlink Control Channel (PDCCH) common search space (CSS) set is configured in Master Information Block (MIB) of SSB. PDCCH transmitted in the Type0-PDCCH CSS set is used to schedule Physical Downlink Shared Channel (PDSCH) carrying System Information Block Type1 (SIB1). The SIB1 carries common configuration information of a serving cell. Other system information except SIB1 is scheduled via PDCCH transmitted in Type0A-PDCCH CSS set. The terminal device may obtain resource configuration for Physical Random Access Channel (PRACH) occasion (RO) during the random access procedure based on SIB1, and then initiate random access to a network device through the configured RO resources. Terminal devices in idle or inactive state may determine whether there is data transmission by monitoring paging messages.

The common channels or signals in the above process, namely SSB, SIB1, other system information except SIB1, paging messages, common PDCCH, and uplink RO resources, are all transmitted periodically. The period length is configured by the network device through system information. From the perspective of the network device, once configured, the resources for the common channels or signals are periodically occupied regardless of whether there is a demand. When service traffic in the system changes, the network cannot quickly reduce the resource configuration for the common channels or signals, and thus fails to achieve better gains of network energy savings.

### SUMMARY

Embodiments of the present application provide a method for channel or signal transmission, a device and storage medium.

The embodiments of the present application provide a method for channel or signal transmission, which includes the following operations.

A terminal device acquires one or more configuration information, the one or more configuration information including first resource configuration information, and the first resource configuration information being used to configure a resource for transmission of a common channel or signal in a first cell.

The terminal device receives first indication information, the first indication information being used to determine a resource used for transmission of the common channel or signal in the first cell.

The embodiments of the present application provide a method for channel or signal transmission, which includes the following operations.

A network device sends one or more configuration information to a terminal device, the one or more configuration information including first resource configuration information, and the first resource configuration information being used to configure a resource for transmission of a common channel or signal in a first cell.

The network device sends first indication information to the terminal device, the first indication information being used to determine a resource used for transmission of the common channel or signal in the first cell.

The embodiments of the present application provide a terminal device, including a first communication unit.

The first communication unit is configured to acquire one or more configuration information, the one or more configuration information including first resource configuration information, and the first resource configuration information being used to configure a resource for transmission of a common channel or signal in a first cell.

The first communication unit is further configured to receive first indication information, the first indication information being used to determine a resource used for transmission of the common channel or signal in the first cell.

The embodiments of the present application provide a network device, including a second communication unit.

The second communication unit is configured to send one or more configuration information to a terminal device, the one or more configuration information including first resource configuration information, and the first resource configuration information being used to configure a resource for transmission of a common channel or signal in a first cell.

The second communication unit is further configured to send first indication information to the terminal device, the first indication information being used to determine a resource used for transmission of the common channel or signal in the first cell.

The embodiments of the present application provide a communication device, which may be the terminal device or the network device in the above scheme. The communication device includes a processor and a memory. The memory is configured to store a computer program, and the processor is configured to invoke and execute the computer program stored in the memory to perform the methods for channel or signal transmission as described above.

The embodiments of the present application provide a chip, which is used to implement the methods for channel or signal transmission as described above

Specifically, the chip includes a processor, configured to invoke and execute a computer program from a memory such that a device on which the chip is mounted performs the methods for channel or signal transmission as described above.

The embodiments of the present application provide a computer-readable storage medium for storing a computer program that causes a computer to perform the methods for channel or signal transmission as described above.

The embodiments of the present application provide a computer program product including computer program instructions that cause a computer to perform the methods for channel or signal transmission as described above.

The embodiments of the present application provide a computer program that, when running on a computer, causes the computer to perform the methods for channel or signal transmission as described above.

Based on the above technical solutions, when the terminal device is configured with the first resource configuration information that is used for configuring a resource for transmission of a common channel or signal in a first cell, the network device indicates, based on the first indication information, that the terminal device determines a resource used for transmission of the common channel or signal according to the resource configured through the first resource configuration information. In this way, the resource used for transmission of the common channel or signal can be flexibly indicated by the network device, so that the resource used for transmission of the common channel or signal can adapt to the service traffic in the system, thereby achieving network energy saving.

### BRIEF DESCRIPTION OF THE DRAWINGS

The accompanying drawings illustrated herein are used to provide further understanding of the present application and constitute a part of the present application. Illustrative embodiments of the present application and their descriptions are used to explain the disclosure, and do not constitute improper limitations to the present application. In the drawings:
FIG. 1 is a schematic diagram of an application scenario in an embodiment of the present application.
FIG. 2 is a schematic diagram of architecture of another communication system provided by an embodiment of the present application.
FIG. 3 is a schematic diagram of architecture of another communication system provided by an embodiment of the present application.
FIG. 4 is an optional schematic flowchart of a method for channel or signal transmission provided by an embodiment of the present application.
FIG. 5 is an optional schematic flowchart of a method for channel or signal transmission provided by an embodiment of the present application.
FIG. 6A is an optional schematic diagram of valid duration of first resource configuration information provided by an embodiment of the present application.
FIG. 6B is an optional schematic diagram of valid duration of first resource configuration information provided by an embodiment of the present application.
FIG. 6C is an optional schematic diagram of valid duration of first resource configuration information provided by an embodiment of the present application.
FIG. 6D is an optional schematic diagram of valid duration of first resource configuration information provided by an embodiment of the present application.
FIG. 6E is an optional schematic diagram of valid duration of first resource configuration information provided by an embodiment of the present application.
FIG. 6F is an optional schematic diagram of valid duration of first resource configuration information provided by an embodiment of the present application.
FIG. 7 is an optional schematic diagram of a DTX period in active state of cell DTX configuration provided by an embodiment of the present application.
FIG. 8 is an optional schematic diagram of valid duration of first resource configuration information provided by an embodiment of the present application.
FIG. 9 is an optional schematic structure diagram of a terminal device provided by an embodiment of the present application.
FIG. 10 is an optional schematic structure diagram of a network device provided by an embodiment of the present application.
FIG. 11 is a schematic structure diagram of a communication device provided by an embodiment of the present application.
FIG. 12 is a schematic structure diagram of a chip provided by an embodiment of the present application.
FIG. 13 is a schematic structure diagram of a communication system provided by an embodiment of the present application.

### DETAILED DESCRIPTION

The technical solutions in embodiments of the present application will be described below in conjunction with the accompanying drawings in the embodiments of the present application. Obviously, the embodiments described are only a part of the embodiments of the present application, and not all of them. Based on the embodiments in the present application, all other embodiments obtained by those skilled in the art without creative work shall fall within the protection scope of the present application

In the scenarios of communication system, terrestrial networks (TN) and non-terrestrial networks (NTN) are included. NTN generally provides communication services to ground users by means of satellite communication. Current NTN systems include NR-NTN and IoT-NTN systems, and other NTN systems may be included in the future.

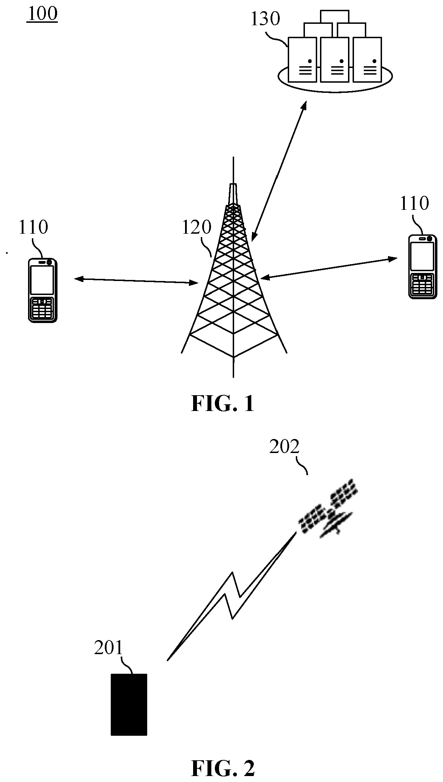

FIG. 1 is a schematic diagram of an application scenario in an embodiment of the present application.

As illustrated in FIG. 1, the communication system 100 may include terminal devices 110 (or referred to as communication terminal devices) and a network device 120. The network device 120 may be a device in communication with the terminal devices 110. Multiple service transmissions are supported between the terminal devices 110 and the network device 120.

It should be understood that the communication system 100 is merely for illustrative purposes in the embodiments of the present application, but the embodiments of the present application are not limited thereto. That is, the technical solutions of the embodiments of the present application may be applied to various communication systems, for example: a Long Term Evolution (LTE) system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or future communication systems, etc.

In the communication system 100 illustrated in FIG. 1, the network device 120 may be an access device in communication with the terminal devices 110. The access device may provide communication coverage for a particular geographic area and may communicate with terminal devices 110 (e.g., UE) located within the coverage.

The network device 120 may be an evolved Node B (eNB or eNodeB) in an LTE system, or a device in a Next Generation Radio Access Network (NG RAN), or a base station (gNB) in an NR system, or a radio controller in a Cloud Radio Access Network (CRAN). Or, the network device 120 may be a relay station, an access point, a vehicle-mounted device, a wearable device, a hub, a switch, a bridge, a router, or a network device in a future evolved Public Land Mobile Network (PLMN), etc.

The terminal device 110 may be any terminal device, including but not limited to a terminal device connected to the network device 120 or other terminal devices via wired or wireless connections.

For example, the terminal device 110 may refer to an access terminal, user equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a session initiation protocol (SIP) telephone, an IoT device, a satellite handheld terminal, a wireless local loop (WLL) station, a personal digital assistant (PDA), a handheld device with wireless communication function, a computing device or other processing device connected to a wireless modem, an in-vehicle device, a wearable device, a terminal device in the 5G network or a terminal device in the future evolved network, etc.

The terminal devices 110 may be used for Device to Device (D2D) communication.

The wireless communication system 100 may further include a core network device 130 that communicates with a base station. The core network device 130 may be a 5G Core (5GC) device, for example, an Access and Mobility Management Function (AMF), or an Authentication Server Function (AUSF), or a User Plane Function (UPF), or a Session Management Function (SMF). Optionally, the core network device 130 may also be an Evolved Packet Core (EPC) device in LTE network, for example, a Session Management Function + Core Packet Gateway (SMF+PGW-C) device. It should be understood that the SMF+PGW-C can simultaneously implement the functions that can be implemented by both SMF and PGW-C at the same time. During network evolution, the above core network devices may also be called other names, or new network entities may be formed by dividing functions of the core network, which is not limited in the embodiments of the present application.

Communication may also be implemented by establishing connections through next generation (NG) interfaces among various functional units in the communication system 100.

For example, a terminal device establishes an air interface connection with an access network device though a Uu interface, for transmitting user plane data and control plane signaling; the terminal device may establish a control-plane signaling connection with the AMF through NG interface 1 (abbreviated as N1); an access network device, such as a next-generation radio access base station (gNB), may establish a user plane data connection with a UPF through NG interface 3 (abbreviated as N3); the access network device may establish a control plane signaling connection with the AMF through NG interface 2 (abbreviated as N2); the UPF may establish a control plane signaling connection with the SMF through NG interface 4 (abbreviated as N4); the UPF may exchange user plane data with a data network through NG interface 6 (abbreviated as N6); the AMF may establish a control plane signaling connection with the SMF through NG interface 11 (abbreviated as N11); the SMF may establish a control plane signaling connection with the PCF through NG interface 7 (abbreviated as N7).

FIG. 1 exemplarily illustrates one network device, one core network device and two terminal devices. Optionally, the communication system 100 may include multiple base station devices, and other numbers of terminal devices may be included within the coverage of each base station, which is not limited in the embodiments of the present application.

3GPP is studying NTN technology. NTN generally provide communication services to ground users by means of satellite communication. Compared with terrestrial cellular communication, satellite communication has many unique advantages. Firstly, satellite communication is not restricted by user regions. For example, ordinary terrestrial communication cannot cover areas such as oceans, high mountains, deserts, where communication devices cannot be deployed or where no communication coverage is provided due to sparse population. For satellite communication, however, since one satellite may cover a large area of the ground and satellites can orbit the Earth, theoretically every corner on the Earth may be covered by satellite communication. Secondly, satellite communication has great social values. Satellite communication can cover remote mountainous areas, poor and underdeveloped countries or regions at a relatively low cost, so that people in these areas can enjoy advanced voice communication and mobile Internet technologies, which helps narrow the digital gap with developed regions and promotes the development of these areas. Thirdly, satellite communication has a long communication distance, and the communication cost does not increase significantly with the increase of communication distance. Finally, satellite communication has high stability and is not restricted by natural disasters.

NTN technology may be combined with various communication systems. For example, NTN technology may be combined with the NR system to form an NR-NTN system. For another example, NTN technology may be combined with the Internet of Things (IoT) system to form an IoT-NTN system. As an example, the IoT-NTN system may include an NB-IoT-NTN system and an eMTC-NTN system.

FIG. 2 is a schematic diagram of architecture of another communication system provided by an embodiment of the present application.

As illustrated in FIG. 2, a terminal device 201 and a satellite 202 are included, and wireless communication may be performed between the terminal device 201 and the satellite 202. The network formed between the terminal device 201 and the satellite 202 may also be referred to as an NTN. In the architecture of the communication system illustrated in FIG. 2, the satellite 202 may have the functions of a base station, and the terminal device 201 and the satellite 202 may communicate directly. Under the system architecture, the satellite 202 may be referred to as a network device. In some embodiments of the present application, the communication system may include multiple network devices 1102, and another number of terminal devices may be included within the coverage of each network device 1102, which is not limited in the embodiments of the present application.

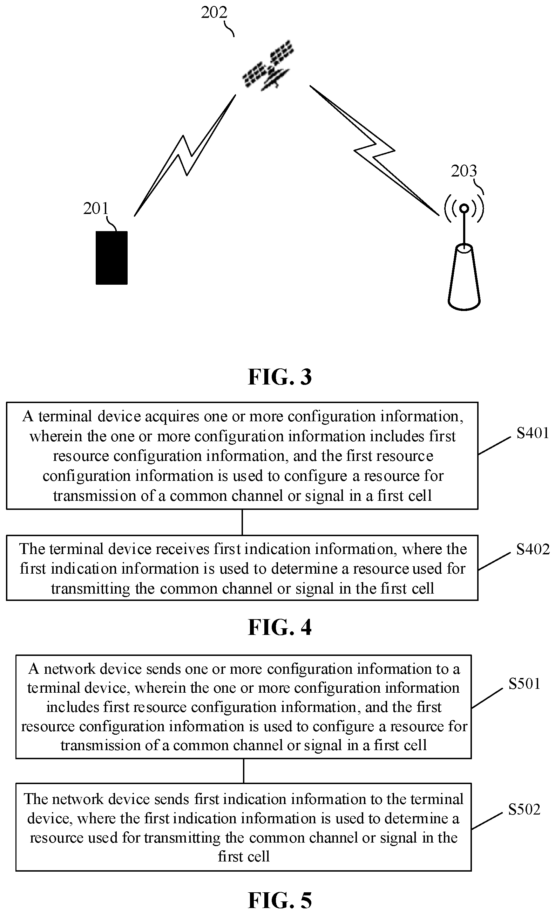

FIG. 3 is a schematic diagram of architecture of another communication system provided by an embodiment of the present application.

As illustrated in FIG. 3, a terminal device 201, a satellite 202 and a base station 203 are included, and wireless communication may be performed among the terminal device 201, the satellite 202 and the base station 203. The network formed among the terminal device 201, the satellite 202 and the base station 203 may also be referred to as an NTN. In the architecture of the communication system illustrated in FIG. 3, the satellite 202 may not have the functions of a base station, and the communication between the terminal device 201 and the base station 203 needs the forwarding via the satellite 202. Under the system architecture, the base station 203 may be referred to as a network device. In some embodiments of the present application, the communication system may include multiple network devices 203, and another number of terminal devices may be included within the coverage of each network device 203, which is not limited in the embodiments of the present application. The base station 203 may be the network device in FIG. 1.

It should be understood that the above satellite 202 includes, but is not limited to:
a Low-Earth Orbit (LEO) satellite, a Medium-Earth Orbit (MEO) satellite, a Geostationary Earth Orbit (GEO) satellite, a High Elliptical Orbit (HEO) satellite, or the like. Satellites can cover ground areas using multiple beams. For example, one satellite may generate dozens or even hundreds of beams to provide ground coverage. In other words, beams of one satellite can cover a ground area with a diameter ranging from tens to hundreds of kilometers, so as to ensure satellite coverage and enhance the overall capacity of the satellite communication system.

In future evolved communication systems such as B5G or 6G, scenarios such as Distributed Multiple-Input Multiple-Output (Distributed MIMO, also referred to as Distributed Antenna System) and/or Massive Multiple-Input Multiple-Output (Massive MIMO, also known as Large-Scale Antenna Arrays) may also be included. In certain cases, the Distributed MIMO and/or Massive MIMO may support Cell-free and/or UE-centric deployment scenarios. It should be understood that the aforementioned scenarios are also applicable to both Terrestrial Networks (TN) and Non-Terrestrial Networks (NTN).

It should be noted that FIGS. 1 to 3 only illustrate systems to which the present application is applicable in the form of examples, and the methods described in the embodiments of the present application may also be applied to other systems. Additionally, the terms "system" and "network" herein may often be used interchangeably. The term "and/or" herein is merely an association relationship for describing related objects, representing that there may be three kinds of relationships. For example, A and/or B may represent the following three situations: i.e., independent existence of A, existence of both A and B, and independent existence of B. In addition, the character "/" in the present disclosure generally represents that an "or" relationship is formed between the previous and next associated objects. It should also be understood that the "indication" mentioned in the embodiments of the present application may be a direct indication, an indirect indication, or may represent an associated relationship. For example, A indicating B may mean that A directly indicates B, for example, B may be acquired by A. It may also mean that A indicates B indirectly, for example A indicates C, and B may be acquired by C. It may also mean that there is an association relationship between A and B. It is to be understood that in the embodiments of the present application, the term "correspondence" mentioned herein may indicate that there is a direct correspondence or indirect correspondence between the two, or indicate that there is a correlation relationship between the two, or indicate a relationship between indicating and being indicated, configuring and being configured, or the like. It is also to be understood that the "predefined" or "predefined rules" referred to in embodiments of the present disclosure may be implemented by pre-storing corresponding codes, tables, or other manners that may be used to indicate relevant information in devices (e.g., including terminal devices and network devices), the specific implementation of which is not limited by the present disclosure. For example, predefined may refer to what is defined in the protocol. It is to be understood that in the embodiments of the present application, the "protocol" may refer to a standard protocol in communication field, including, for example, an LTE protocol, an NR protocol, and related protocols applied in future communication systems, which are not limited in the present application.

To facilitate understanding of the technical solutions in the embodiments of the present application, the related technologies involved in the embodiments of the present application are described below. As optional solutions, the following related technologies may be combined with the technical solutions of the embodiments of the present application arbitrarily, all of which fall within the protection scope of the embodiments of the present application.

Network energy saving is of great significance to environmental sustainability, reducing environmental impact (mitigating emissions of greenhouse gas), and cutting operating costs. With the gradual popularization of 5G across various industries and geographical regions, there is a demand to support extremely high data transmission rates to handle advanced services and applications (e.g., XR). Network deployments have become denser, employing more antennas, larger bandwidths, and more frequency bands. Given the environmental impact of 5G, it is necessary to develop new and controlled solutions to enhance network energy saving.

Energy consumption has become a key part of operators' operational expenditure (OPEX). Most energy consumption comes from the radio access network, and more specifically, from Active Antenna Units (AAUs), while data centers and optical fiber transmission account for a smaller share. The power consumption of a single radio access may be divided into two parts: dynamic part and static part. The dynamic part includes only the power consumption when data is being transmitted or received, and the static part includes the power consumption required to maintain the necessary operation of radio access devices at all times, including when no data is being transmitted or received.

Therefore, based on the above objectives, it is necessary to research and develop network energy consumption models, KPIs, evaluation methods, etc., on the network device side, so as to determine and study network energy saving technologies in target deployment scenarios. Among them, the already defined power consumption model on the terminal device side may be used as a reference. The research should focus on how to achieve more efficient dynamic operation and/or semi-static operation, and consider one or more network energy saving technologies applied in the time domain, frequency domain, spatial domain and power domain, combined with potential terminal device feedback support, potential terminal device assistance information, and information exchange or coordination between network interfaces, so as to achieve adaptive data transmission and/or reception with finer-granularity.

It is to be noted that the research not only evaluates potential gains of the network energy saving, but also needs to assess and balance the impact on network and user performance by observing KPIs such as spectral efficiency, capacity, user perceived throughput (UPT), delay, terminal device power consumption (UE power consumption), complexity, handover performance, call drop rate, initial access performance, SLA security-related KPIs, and so on. The research should avoid significant adverse impacts on the above KPIs.

In NR systems, the initial access procedure of a terminal device can be completed by detecting Synchronization Signal/PBCH blocks (SSBs or SS/PBCH blocks) on sync raster(s). The SSBs are transmitted through a Discovery Burst Transmission Window or an SSB transmission opportunity window. A Type0-Physical Downlink Control Channel (PDCCH) common search space (CSS) set is configured in Master Information Block (MIB) of SSB. The PDCCH transmitted in the Type0-PDCCH CSS set is used to schedule Physical Downlink Shared Channel (PDSCH) carrying System Information Block Type1 (SIB1). The SIB1 carries common configuration information of a serving cell. Other system information except SIB1 is scheduled via PDCCH transmitted in Type0A-PDCCH CSS set. The terminal device may obtain resource configuration for Physical Random Access Channel (PRACH) occasion (RO) during the random access procedure based on SIB1, and then initiate random access to a network device through the configured RO resources. Terminal devices in idle or inactive state may determine whether there is a paging message by monitoring PDCCH transmitted in Type2-PDCCH CSS or Type2A-PDCCH CSS set.

The common channels or signals in the above process, namely SSB, SIB1, other system information besides SIB1, paging messages, common PDCCH, and uplink RO resources, are all transmitted periodically. The period length is configured by the network device through high-layer parameters. From the perspective of the network device, once configured, the resources for the common channels or signals are periodically occupied regardless of whether there is a demand. For example, downlink common channels or signals are transmitted, and resources for uplink common channels or signals are reserved. If the configuration of the above common channels or signals needs to be updated, such as updating the period or time-domain resource position, it can only be implemented by updating through system information. For scenarios with significant fluctuations in service traffic within a cell, using system information modification cannot quickly adapt to traffic changes. When the service traffic in the system becomes small, the network cannot quickly reduce the resource configuration for the common channels or signals, and thus fails to achieve better gains of network energy savings.

In a case where the configuration of common channels or signals, such as updating the period and time-domain resource position, can only be completed through system information update, if it is desired to quickly adapt the resource configuration of common channels or signals to the service traffic in the system, one method is to dynamically adjust the transmission period and time-domain positions of common channels or signals by the network device. In this way, the network device can better achieve the gain of network energy saving when the resources used for transmission of the common channel or signal are adapted to the service traffic in the system. However, such dynamic adjustment of system information configuration will inevitably affect legacy UEs and UEs in idle state/inactive state/connected state. Therefore, how to enable the legacy UEs and UEs in idle state/inactive state/connected state to obtain information about the dynamic configuration/update of system information by the network device is a problem to be solved. It may be understood that the legacy UEs herein refer to devices that do not support the method for channel or signal transmission provided in the embodiments of the present application.

In order to facilitate understanding of the technical solutions of the embodiments of the present application, the technical solutions of the present application will be described in detail by specific embodiments below. The above related technologies may be combined with the technical solutions of the embodiments of the present application arbitrarily as optional solutions, all of which belong to the protection scope of the embodiments of the present application. Embodiments of the present application include at least some of the following.

FIG. 4 illustrates a method for channel or signal transmission provided by an embodiment of the present application, which is applied to a terminal device and includes operations S401, S402.

In S401, the terminal device acquires one or more configuration information, where the one or more configuration information includes first resource configuration information, and the first resource configuration information is used to configure a resource for transmission of a common channel or signal in a first cell.

In S402, the terminal device receives first indication information, where the first indication information is used to determine a resource used for transmission of the common channel or signal in the first cell.

FIG. 5 illustrates a method for channel or signal transmission provided by an embodiment of the present application, which is applied to a network device and includes operations S501, S502.

In S501, the network device sends one or more configuration information to a terminal device, where the one or more configuration information includes first resource configuration information, and the first resource configuration information is used to configure a resource for transmission of a common channel or signal in a first cell.

In S502, the network device sends first indication information to the terminal device, where the first indication information is used to determine a resource used for transmission of the common channel or signal in the first cell.

In embodiments of the present application, the network device sends one or more configuration information to the terminal device, where the one or more configuration information include one or more resource configuration information, and the one or more resource configuration information includes the first resource configuration information. If the one or more configuration information includes one resource configuration information, then the resource configuration information is the first resource configuration information. If the one or more configuration information include multiple resource configuration information, then the first resource configuration information is one of the multiple resource configuration information. The network device configures a resource(s) for transmission of the common channel or signal in the first cell to the terminal device through the resource configuration information. The resource(s) may be common resource(s) in the first cell.

The first resource configuration information is used to configure a resource(s) for transmission of a common channel or signal in a first cell. The resource(s) configured by the first resource configuration information are used for transmission of the common channel or signal in the first cell, i.e., the configured resource(s) are used for terminal devices accessing the first cell to transmit common channels or signals.

Optionally, the network device sends the one or more configuration information to the terminal device through system information. The system information includes at least one of the following: MIB, SIB1, and system information other than SIB1.

Optionally, if the one or more resource configuration information includes only the first resource configuration information, the first resource configuration information is sent by the network device to the terminal device through MIB and/or SIB1.

For ease of description hereinafter, a resource for transmission of a common channel or signal in a cell, configured by resource configuration information, is referred to as a common resource in the cell. For example, the resource for transmission of the common channel or signal in the first cell, configured by the first resource configuration information, is referred to as a first common resource in the first cell. Optionally, the resource configuration information may be used to configure a common resource that is used for transmission of the common channel or signal in a cell, or configure a common resource that is not used for transmission of the common channel or signal in a cell. For example, the first common resource in the first cell is configured through the first resource configuration information, or it is configured through the first resource configuration information that there is no common resource in the first cell.

The network device further sends first indication information to the terminal device, where the first indication information is used to determine a resource used for transmission of the common channel or signal in the first cell.

For ease of description hereinafter, the resource used for transmission of the common channel or signal in the first cell is referred to as a target common resource in the first cell.

After determining the target common resource in the first cell based on the first indication information, the terminal device performs transmission of the common signal or channel in the first cell based on the target common resource.

Optionally, the terminal device determines the target common resource in the first cell based on the first resource configuration information and the first indication information.

Optionally, the first indication information is used to determine the first resource configuration information or whether the first resource configuration information is valid. The terminal device determines whether the first common resource in the first cell configured through the first resource configuration information is the target common resource in the first cell.

In an example, in a case where the first common resource is configured by the first resource configuration information and the first indication information indicates the first resource configuration information or that the first resource configuration information is valid, the terminal device determines the first common resource in the first cell to be the target common resource in the first cell based on the first indication information.

In an example, in a case where the first common resource is configured by the first resource configuration information and the first indication information indicates that the first resource configuration information is not valid, the terminal device determines that there is no target common resource in the first cell.

In an example, in a case where it is configured that there is no common resource in the first cell by the first resource configuration information, the terminal device determined that there is no target common resource in the first cell.

In an example, in a case where the first common resource is configured by the first resource configuration information and the first indication information indicates that the first cell is shut down, i.e., indicating that there is no resource for transmission of the common channel or signal in the first cell, the terminal device determines that there is no target common resource in the first cell.

It may be understood that the first indication information is associated with the first cell. The terminal device sends the first indication information to all terminal devices accessing the first cell, so as to indicate the terminal device accessing the first cell to determine the target common resource, and perform the transmission of the common channel or signal based on the determined target common resource.

According to the method for channel or signal transmission provided by the embodiments of the present application, in a case where the terminal device is configured with the first resource configuration information for configuring a resource for transmission of a common channel or signal in a first cell, the network device indicates, based on the first indication information, that the terminal device determines a resource used for transmission of the common channel or signal. In this way, the resource used for transmission of the common channel or signal can be flexibly indicated by the network device, so that the resource used for transmission of the common channel or signal adapts to the service traffic in the system, thereby achieving network energy saving.

In some embodiments, the one or more configuration information includes the resource configurations information by the following manners:
manner A1, the one or more configuration information includes N resource configuration information, N being a positive integer; or
manner B1, the one or more configuration information includes M resource configuration information groups associated with M cells, each of the resource configuration information groups being used to configure a resource for transmission of a common channel or signal in a cell, where the first resource configuration information group in the M resource configuration information groups includes N resource configuration information, M and N being positive integers.

Here, each of the N resource configuration information is used to configure a resource for transmission of a common channel or signal in the first cell, and the N resource configuration information includes the first resource configuration information.

In an embodiment of the present application, N is greater than or equal to 1.

Optionally, when N is greater than or equal to 2, periods associated with different resource configuration information among the N resource configuration information are different from each other in size.

In the manner A1, the one or more configuration information includes N resource configuration information corresponding to the first cell.

In the manner B1, the one or more configuration information includes M resource configuration information group(s). If M is equal to 1, then the resource configuration information group is a first resource configuration information group corresponding to the first cell. If M is greater than 1, different resource configuration information groups are associated with different cells, and the M resource configuration information groups include the first resource configuration information group associated with the first cell. The first resource configuration information group associated with the first cell includes N resource configuration information groups.

For the M resource configuration information groups, different resource configuration information groups include the same number or different numbers of resource configuration information.

In some embodiments, if N is equal to 1, then the N resource configuration information only includes the first resource configuration information. The network device indicates, through the first indication information, whether the first resource configuration information is used for transmission of the common channel or signal in the first cell, for example, indicating whether the first resource configuration information is valid. The terminal device determines, based on the first indication information, whether to perform the transmission of the common channel or signal in the first cell using the first common resource.

In an example, N is 1. When the first indication information indicates being valid (e.g., "1"), it indicates that the first common resource determined according to the first resource configuration information is valid, and in this case, the terminal device performs the transmission of the common channel or signal in the first cell using the first common resource. Or, when the first indication indicates being invalid (e.g., "0"), it indicates that the first common resource determined according to the first resource configuration information is not valid or that the first cell is shut down, and in this case, the terminal device determines that there is no target common resource in the first cell.

In some embodiments, the first indication information being used to determine a resource used for transmission of the common channel or signal in the first cell, includes: the first indication information being used to determine the first resource configuration information from the N resource configuration information.

In an example, N is equal to 1. When the first indication indicates the first resource configuration information (e.g., "1"), the target common resource is the first common resource, and in this case, the terminal device performs the transmission of the common channel or signal in the first cell using the first common resource. Or, when the first indication indicates a preset value (e.g., "0"), it indicates that the first cell is shut down, and in this case, the terminal device determines that there is no target common resource in the first cell.

Optionally, the first indication information being used to determine the first resource configuration information from the N resource configuration information, includes that: when N is greater than 1, the first indication information is used to indicate the first resource configuration information from the N resource configuration information. That is, the terminal device determines, based on the first resource configuration information, that the first common resource in the first cell determined is the target common resource in the first cell.

In an example, N is equal to 2. The N resource configuration information includes resource configuration information A for configuring common resource A and resource configuration information B for configuring common resource B. If the first indication information indicates 0, it indicates the common resource A (i.e., the first common resource is the common resource A), and the terminal device performs the transmission of the common channel or signal in the first cell using the common resource A. If the first indication indicates 1, it indicates the common resource B (i.e., the first common resource is the common resource B), and the terminal device performs the transmission of the common channel or signal in the first cell using the common resource B.

In an example, N is equal to 2. The N resource configuration information includes resource configuration information A for configuring common resource A and resource configuration information B for configuring common resource B, and the first indication information includes a first bit and a second bit that respectively correspond to the resource configuration information A and the resource configuration information B. If the value of the first bit is 1, then the first indication information indicates the resource configuration information A (i.e., the first common resource is common resource A), and the terminal device performs the transmission of the common channel or signal in the first cell using the common resource A. If the value of the second bit is 1, then the first indication information indicates the resource configuration information B (i.e., the first common resource is common resource B), and the terminal device performs the transmission of the common channel or signal in the first cell using the common resource B.

Optionally, the first indication information being used to determine a resource used for transmission of the common channel or signal in the first cell, includes: the first indication information being used to indicate that the target resource configuration information is switched to the first resource configuration information. Here, the target resource configuration information is configuration information associated with a resource used for transmission of the common channel or signal in the first cell, that is, the target resource configuration information is configuration associated with the target common resource in the first cell.

It may be understood that, the first indication information being used to determine a resource used for transmission of the common channel or signal in the first cell may include that: the first indication information is used to indicate that the target resource configuration information is switched to the first resource configuration information from currently used resource configuration information.

In an example, N is equal to 2. The N resource configuration information includes resource configuration information A for configuring common resource A and resource configuration information B for configuring common resource B. If the target common resource is common resource A, when the first indication information indicates not switching (e.g., "0"), then the target common resource is the common resource A, and the terminal device performs the transmission of the common channel or signal in the first cell using the common resource A. When the first indication indicates switching (e.g., "1"), the target common resource is the common resource B, and the terminal device performs the transmission of the common channel or signal in the first cell using the common resource B.

In the embodiments of the present application, no limitation is made on the determination of the first resource configuration information according to the first indication information.

In some embodiments, the number of bits in the first indication information required for indicating the first resource configuration information from the N resource configuration information may be determined according to N.

Optionally, if N is greater than or equal to 2, the number of the bits is ceil (log2 (N)) bits, where log2 ( ) denotes a logarithm with base 2, and ceil ( ) denotes rounding up. For example, when the value of N is 2, the number of bits used for indicating the first resource configuration information from the N resource configuration information is 1 bit. For another example, when the value of N is 3, the number of bits used for indicating the first resource configuration information from the N resource configuration information is 2 bits.

Optionally, the number of bits used for indicating the first resource configuration information from the N resource configuration information is N bits. For example, when the value of N is 3, the number of bits used for indicating the first resource configuration information from the N resource configuration information is 3 bits, and each bit corresponds to one piece of resource configuration information.

In some embodiments, the first indication information is carried in a first Downlink Control Information (DCI) format.

In some embodiments, the one or more configuration information is further used to determine first DCI format configuration information, and the first DCI format configuration information is used to determine one or more of the following:
information 1-1, configuration of the first DCI format;
information 1-2, a first search space set associated with the first DCI format;
information 1-3, a time-domain position of the first search space set;
information 1-4, a control resource set associated with the first search space set (SSS);
information 1-5, a number of information bits in the first DCI format;
information 1-6, a first Radio Network Temporary Identity (RNTI) associated with the first DCI format;
information 1-7, an association relationship between the first cell and the first indication information; or
information 1-8, a start location of the first indication information in the first DCI format.

It is to be noted that the 'used to determine' in the embodiments of the present application may be understood as direct determination or indirect determination.

The one or more configuration information being used to determine first DCI format configuration information and the first DCI format configuration information being used to determine one or more of the information 1-1 to 1-8, may also be replaced by that: the one or more configuration information is used to indicate one or more of the information 1-1 to 1-8.

For the information 1-1, it is used to indicate that the first indication information is carried in the first DCI format.

For the information 1-2, it may be a set identity of the first search space set (SSS). The first SSS is used for the terminal device to monitor the first DCI format.

For the information 1-3, it may be used to indicate a time-domain position that is monitored when the terminal device monitors the first DCI format.

For the information 1-4, it is used to indicate a frequency-domain position that is monitored when the terminal device monitors the first DCI format.

For the information 1-5, it is used to indicate the size of the first DCI format.

For the information 1-6, it is used for the terminal device to monitor the first DCI format.

For the information 1-7, it is used to indicate that the first indication information carried for the terminal device is used for the first cell.

For the information 1-8, it is used to indicate a start location where the first DCI format is located in the first DCI format.

In some embodiments, the terminal device receiving first indication information includes that:
the terminal device receives the first indication information based on the first DCI format configuration information.

In some embodiments, the network device sending the first indication information to the terminal device includes that:
the network device sends the first indication information to the terminal device based on the first DCI format configuration information.

Optionally, the terminal device performs monitoring of the first DCI format based on one or more of the information 1-1 to 1-6 determined by the one or more configuration information, and parses the first indication information based on the information 1-7 and 1-8.

In some embodiments, a start location of a valid duration of the first resource configuration information is determined by one of the following manners:
start location determination manner 1-1, the start location being a start location of a first period in which the first DCI format is received;
start location determination manner 1-2, the start location being an end location of a first period in which the first DCI format is received;
start location determination manner 1-3, the start location being a start location of a next first period after the first DCI format is received;
start location determination manner 1-4, the start location being a start location of a first slot after a first delay duration upon reception of the first DCI format;
start location determination manner 1-5, the start location being a start location of a next first period after a first delay duration upon reception of the first DCI format; or
start location determination manner 1-6, the start location being indicated by the first DCI format;
start location determination manner 1-7, a time interval between the start location and a time-domain resource at which the first DCI format is received being pre-configured or predefined.

Herein, the first period is a period associated with the first resource configuration information.

Optionally, the start location of the valid duration of the first resource configuration information may be replaced with a start location of a valid duration of the first indication information.

It may be understood that when the first common resource in the first cell is configured by the first resource configuration information, starting from the start location of the valid duration of the first resource configuration information, the target common resource in the first cell is the first common resource in the first cell.

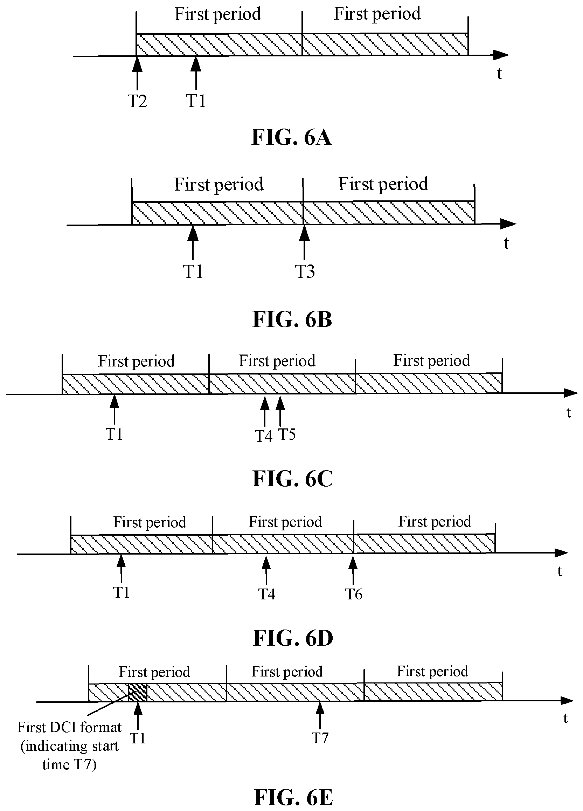

For the start location determination manner 1-1, in an example, as illustrated in FIG. 6A, the terminal device receives the first DCI format at time T1, and the start location of the valid duration of the first resource configuration information is start time T2 of the first period in which the T1 is located.

For the start location determination manner 1-2, in an example, as illustrated in FIG. 6B, the terminal device receives the first DCI format at time T1, and the start location of the valid duration of the first resource configuration information is end time T3 of the first period in which the T1 is located.

For the start location determination manner 1-2, the end location of the first period in which the first DCI format is received may be replaced with a start location of a next first period after the first DCI format is received. It may be understood that start locations of the valid duration of the first resource configuration information determined using the start location determination manner 1-2 and the start location determination manner 1-3 are the same.

For the start location determination manner 1-4, after receiving the first DCI format, the terminal device determines a start location of the first slot after delaying the reception time of the first DCI format for a first delay duration as the start location of the valid duration of the first resource configuration information.

In an example, as illustrated in FIG. 6C, the terminal device receives the first DCI format at time T1, and time T4 is obtained by delaying T1 for the first delay duration. Then, the start location of the valid duration of the first resource configuration information is start location T5 of the first slot after T4.

Optionally, the first delay duration is related to subcarrier spacing. The first delay duration varies with different subcarrier spacings.

For the start location determination manner 1-5, after the terminal device receives the first DCI format, the reception time of the first DCI is extended by the first delay duration to obtain a time location. An end location of a first period in which the time location is located or a start location of a next first period after the time location is determined by the terminal device as the start location of the valid duration of the first resource configuration information.

In an example, as illustrated in FIG. 6D, the terminal device receives the first DCI format at time T1, and T1 is extended by a first delay duration to obtain time T4. Then, the start location of the valid duration of the first resource configuration information is end time of the first period in which T4 is located or is start time T6 of a next first period for the first period in which T4 is located.

For the start location determination manner 1-6, after receiving the first DCI format, the terminal device determines the start location of the valid duration of the first resource configuration information indicated by the first DCI format.

Optionally, the start location being indicated by the first DCI format includes that the start location is indicated by the first indication information.

In an example, as illustrated in FIG. 6E, the terminal device receives the first DCI format at time T1, and the start location of the valid duration of the first resource configuration information is time T7. Then, the start location of the valid duration of the first resource configuration information is T7.

For the start location determination manner 1-7, the pre-configured or predefined may be understood as agreed by protocols.

After receiving the first DCI format, the terminal device determines a time after delaying the reception time of the first DCI format for a pre-configured or predefined duration as the start location of the valid duration of the first resource configuration information.

In some embodiments, a length of the valid duration of the first resource configuration information is determined by one of the following manners:
length determination manner 1-1, the length being a pre-configured or predefined value;
length determination manner 1-2, the length being a pre-configured duration of a first timer; or
length determination manner 1-3, the length being indicated by the first DCI format.

If the length of the valid duration of the first resource configuration information is the duration of the first timer, then the terminal device starts or restarts the first timer at a start time when the first resource configuration information takes valid. When the first timer expires, the valid duration of the first resource configuration information ends, i.e., the first resource configuration information is not valid.

Optionally, the terminal device determines a first time window based on the start location of the valid duration of the first resource configuration information and the length of the valid duration of the first resource configuration information. Here, the first resource configuration information is valid within the first time window, or the first indication information is valid within the first time window.

Optionally, when the first resource configuration information takes valid, it may be considered that the first resource configuration information is valid. The terminal device determines the resource used for transmission of the common channel or signal in the first cell based on the first resource configuration information.

In some embodiments, in a case of the length being indicated by the first DCI format, a length indicated by the first DCI format is a remaining duration of the valid duration of the first resource configuration information.

Optionally, the length being indicated by the first DCI format includes: the length being indicated by the first indication information.

Optionally, the length indicated by the first DCI format is L, and then the remaining duration of the valid duration of the first resource configuration information indicated by the first DCI format is L.

In some embodiments, the length is in unit of one of the following:
length of a first period, slot, subframe, half frame, millisecond, and second; where the first period is a period associated with the first resource configuration information.

Optionally, if the length indicated by the first DCI format is L, and the length is in unit of the length of the first period, then it represents that the length is L first periods. For example, if the first DCI format indicates L first periods, and the indicated length is the remaining duration of the valid duration of the first resource configuration information, then it represents that the first resource configuration information takes valid within the L first periods starting from the reception of the first DCI format.

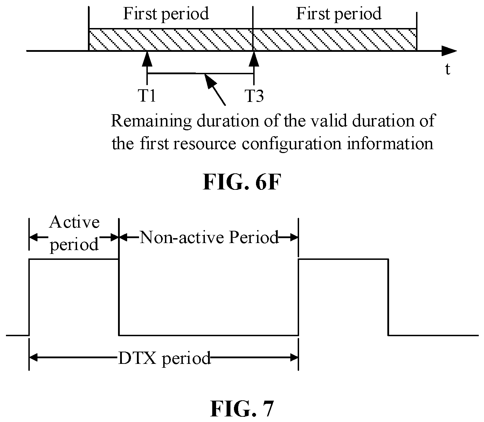

In an example, as illustrated in FIG. 6F, the remaining duration of the first resource configuration information indicated by the first DCI format is 1, and the length is in unit of the length of the first period. Then, the remaining duration of the first resource configuration information is one first period, and the end location of the valid duration of the first resource configuration information indicated by the first DCI format is an end location of a first period during which the first DCI format is received. For example, the remaining duration of the valid duration is a duration between the reception time T1 of the first DCI format and an end location T3 of the first period during which the first DCI format is received.

In some embodiments, when the one or more configuration information include M resource configuration information groups, the first DCI format contains M indication information. Each indication information is used to determine a resource for transmission of a common channel or signal in a respective cell associated with the indication information.

Here, the M indication information contained in the first DCI format includes the first indication information associated with the first cell.

In some embodiments, the N resource configuration information includes one resource configuration information for determining that there is no resource for transmission of the common channel or signal in the first cell; or
the first indication information is further used to determine that there is no resource for transmission of the common channel or signal in the first cell; or
the first DCI format is further used to determine that there is no resource for transmission of the common channel or signal in the first cell.

It may be understood that in the embodiments of the present application, there being no resource for transmission of the common channel or signal in the first cell includes that: there is no resource for transmission of a downlink common channel(s) or signal(s), and/or there is no resource for transmission of an uplink common channel(s) or signal(s).

Optionally, the N resource configuration information includes one resource configuration information for determining that there is no resource for transmission of the common channel or signal in the first cell. When the first indication information indicates the resource configuration information (i.e., the resource configuration information is the first resource configuration information), there is no resource for transmission of the common channel or signal in the first cell, or it may be understood as that the first cell is shut down. As an example, an N-th resource configuration information in the N resource configuration information is used to indicate that the first cell is shut down. When the first indication information indicates the N-th resource configuration information, it represents that there is no target common resource in the first cell.

Optionally, when the first indication information indicates a preset value, the first indication information is used to indicate that there is no resource for transmission of the common channel or signal in the first cell, or it may be considered that the first cell is shut down, and there is no target common resource in the first cell. As an example, when bits in the first indication information all indicate 0 or all 1, it represents that the first cell is shut down or there is no resource for transmission of the common channel or signal in the first cell.

Optionally, in addition to the first indication information, the first DCI format further includes information for indicating cell shutdown. As an example, when the information for indicating cell shutdown in the first DCI format indicates cell shutdown, one or more cells including the first cell associated with the first DCI format are all shut down. There is no resource for transmission of the common channel or signal in each of the one or more cells. In some cases, the one or more cells include a Primary cell and/or Primary Secondary Cell for the terminal device.

Optionally, when the first DCI format indicates the primary cell for the terminal device is shut down, the terminal device does not parse the first indication information associated with the primary cell in the first DCI format.

In some embodiments, the first indication information is carried in a first MAC control element (MAC CE) signaling.

In some embodiments, the start location of the valid duration of the first resource configuration information is a start location of a valid duration of the first MAC CE signaling; and/or
a length of the valid duration of the first resource configuration information is a pre-configured or predefined value.

In some embodiments, the length is in unit of one of the following:
length of a first period, slot, subframe, half frame, millisecond, and second; where the first period is a period associated with the first resource configuration information.

The length of a valid duration of the first resource configuration information may be in unit of any one of the above time units.

In an example, the length is in unit of the first period, and the value of the pre-configured or predefined length is 2. Then, the length of the valid duration of the first resource configuration information is two first periods.

In some embodiments, when the one or more configuration information include M resource configuration information groups, the first MAC CE signaling includes M indication information, where each indication information is used to determine a resource for transmission of a common channel or signal in a respective cell associated with the indication information.

Here, the M indication information contained in the first MAC CE signaling include the first indication information associated with the first cell.

In some embodiments, the N resource configuration information includes one resource configuration information for determining that there is no resource for transmission of the common channel or signal in the first cell; or
the first indication information is further used to determine that there is no resource for transmission of the common channel or signal in the first cell; or
the first MAC CE signaling is further used to determine that there is no resource for transmission of the common channel or signal in the first cell.

Optionally, the N resource configuration information include one resource configuration information for determining that there is no resource for transmission of the common channel or signal in the first cell. When the first indication information indicates the resource configuration information (i.e., the resource configuration information is the first resource configuration information), there is no resource for transmission of the common channel or signal in the first cell, or it may be understood as that the first cell is shut down. As an example, an N-th resource configuration information in the N resource configuration information is used to indicate that the first cell is shut down. When the first indication information indicates the N-th resource configuration information, it represents that there is no target common resource in the first cell.

Optionally, when the first indication information indicates a preset value, the first indication information is used to indicate that there is no resource for transmission of the common channel or signal in the first cell. In this case, it may be considered that the first cell is shut down, and there is no resource for transmission of the common channel or signal in the first cell. As an example, when bits in the first indication information all indicate 0 or all 1, it represents that the first cell is shut down or there is no resource for transmission of the common channel or signal in the first cell.

Optionally, in addition to the first indication information, the first MAC CE signaling further includes information for indicating cell shutdown. As an example, when the information for indicating cell shutdown in the first MAC CE signaling indicates cell shutdown, the first cell associated with the first MAC CE signaling is shut down.

In some embodiments, the terminal device determines the resource used for transmission of the common channel or signal in the first cell based on the first resource configuration information.

The following are examples of how the terminal device determines the target common resource in the first cell based on the first indication information and the first resource configuration information,

As an example, the one or more configuration information include resource configuration information A and resource configuration information B. The terminal device monitors the first DCI format, and the first indication information in the first DCI format is used to indicate the first resource configuration information. When the first indication information in the first DCI format received by the terminal device indicates resource configuration information A, the terminal device determines that the first resource configuration information is the resource configuration information A. That is, starting from the start location of the valid duration of the first resource configuration information, e.g., from the start location of the first period during which the first DCI format is received, the terminal device determines the target common resource in the first cell according to the resource configuration information A. When the first indication information in the first DCI format received by the terminal device indicates the resource configuration information B, the terminal device determines that the first resource configuration information is the resource configuration information B. That is, starting from the start location of the valid duration of the first resource configuration information, e.g., from the start location of the first period during which the first DCI format is received, the terminal device determines the target common resource in the first cell according to the resource configuration information B.

As another example, the one or more configuration information include resource configuration information A and resource configuration information B. The terminal device monitors the first DCI format, and the first indication information in the first DCI format is used to indicate whether to switch the target resource configuration information. If the target common resource in the current first cell is determined according to resource configuration information A, when the first indication information in the first DCI format received by the terminal device indicates no switching (e.g., "0"), the terminal device determines that the target common resource in the first cell is still determined according to the resource configuration information A. When the first indication information in the first DCI format received by the terminal device indicates switching (e.g., "1"), from the start location of the valid duration of the first DCI format, e.g., from the next period after a first delay duration upon reception of the first DCI format, the terminal device determines that the target common resource in the first cell is determined according to the resource configuration information B.

As another example, the one or more configuration information includes the first resource configuration information. The terminal device monitors the first DCI format, and the first indication information in the first DCI format is used to indicate whether the first resource configuration information is valid. When the first indication information in the first DCI format received by the terminal device indicates being valid (e.g., "1"), from the start location of the valid duration of the first indication information, e.g., from a first slot after a first delay duration upon reception of the first DCI format, the terminal device determines the target common resource in the first cell according to the first resource configuration information. When the first indication information in the first DCI format received by the terminal device indicates being invalid (e.g., "0"), from the start location of the valid duration of the first indication information, e.g., from the first slot after a first delay duration upon reception of the first DCI format, the terminal device determines that the fist cell is shut down.

As another example, the one or more configuration information include resource configuration information A and resource configuration information B. The first indication information in the first MAC CE signaling is used to indicate the first resource configuration information. When the first indication information in the first MAC CE signaling received by the terminal device indicates resource configuration information A, the terminal device determines that the first resource configuration information is the resource configuration information A. That is, from the start location of the valid duration of the first MAC CE signaling, the terminal device determines the target common resource in the first cell according to the resource configuration information A. When the first indication information in the first MAC CE signaling indicates resource configuration information B, the terminal device determines that the first resource configuration information is the resource configuration information B. That is, from the start location of the valid duration of the first MAC CE signaling, the terminal device determines the target common resource in the first cell according to the resource configuration information B.

As another example, the one or more configuration information includes the first resource configuration information. The first indication information in the first MAC CE signaling is used to indicate whether the first resource configuration information is valid. When the first indication information in the first MAC CE signaling received by the terminal device indicates being valid (e.g., "1"), from the start location of the valid duration of the first MAC CE signaling, the terminal device determines the target common resource in the first cell according to the first resource configuration information. When the first indication information in the first MAC CE signaling received by the terminal device indicates being invalid (e.g., "0"), from the start location of the valid duration of the first MAC CE signaling, the terminal device determines that the fist cell is shut down.

In some embodiments, the one or more configuration information include cell discontinuous reception (DRX) configuration information and/or cell discontinuous transmission (DTX) configuration information of the first cell.

Optionally, the one or more configuration information further include cell DRX configuration information and/or cell DTX configuration information of the first cell by the following manner A2 or B2.

Manner A2, the one or more configuration information further include cell DRX configuration information and/or cell DTX configuration information of the first cell.

Manner B2, the one or more configuration information include cell DRX and/or cell DTX configuration information of M cells, and the cell DRX and/or the cell DTX configuration information of the M cells includes the cell DRX and/or cell DTX configuration information of the first cell.

Optionally, the one or more configuration information including cell DRX configuration information and/or cell DTX configuration information of the first cell, includes one of the following:
the one or more configuration information include cell DTX configuration information of the first cell;
the one or more configuration information include cell DRX configuration information of the first cell; or
the one or more configuration information include cell DRX configuration information and/or cell DTX configuration information of the first cell.

In manner B2, the one or more configuration information include cell DRX and/or cell DTX configuration information of M cells. If M is equal to 1, then the cell DRX and/or cell DTX configuration information is the cell DRX and/or cell DTX configuration information of the first cell. If M is greater than 1, then different cell DRX and/or cell DTX configuration information are associated with different cells, and one of the M cell DRX and/or cell DTX configuration information is the cell DRX and/or cell DTX configuration information associated with the first cell.

In some embodiments, the first indication information being used to determine the resource used for transmission of the common channel or signal in the first cell, includes:
the first indication information being used to indicate to activate or deactivate the cell DRX and/or cell DTX configuration information of the first cell, and an active or inactive state of the cell DRX and/or cell DTX configuration information of the first cell is used to determine the resource used for transmission of the common channel or signal in the first cell; or
the first indication information being used to indicate that the first cell is shut down.

Optionally, the one or more configuration information include one resource configuration information, and the resource configuration information is the first resource configuration information of the first cell.

Optionally, the terminal device acquires the first resource configuration information through MIB and/or SIB1 information.

Optionally, the first resource configuration information is used to determine the first common resource in the first cell. The first indication information is used to determine the target common resource from the first common resource.

Optionally, the active or inactive state of the cell DTX and/or cell DRX configuration information of the first cell is used to determine the first resource configuration information is valid or invalid. Or, the active or inactive state of the cell DTX and/or cell DRX configuration information of the first cell is used to determine the first resource configuration information is valid or invalid.

It may be understood that the cell DTX and/or cell DRX configuration includes active period and non-active period. FIG. 7 illustrates a schematic diagram of active period and non-active period in a cell DTX period.

Optionally, when the cell DTX configuration information is activated (for example, the first indication information indicates to activate the cell DTX configuration information of the first cell), in the first cell, a resource for transmission of a downlink common channel or signal, that is within the non-active period of cell DTX, in the first common resource is not valid (i.e., the target common resource does not include the downlink common resource within the non-active period of the cell DTX in the first common resource).

Optionally, when the cell DTX configuration information is activated (for example, the first indication information indicates to activate the cell DTX configuration information of the first cell), in the first cell, a resource for transmission of a downlink common channel or signal, that is within the active period of cell DTX, in the first common resource is valid (i.e., the target common resource includes the downlink common resource within the active period of the cell DTX in the first common resource).

Optionally, when the cell DTX configuration information is deactivated (for example, the first indication information indicates to deactivate the cell DTX configuration of the first cell) or cell DTX is not configured, in the first cell, a resource for transmission of a downlink common channel or signal in the first common resource is valid (i.e., the target common resource includes the downlink common resource of the first common resource).

Optionally, when the cell DRX configuration information is activated (for example, the first indication information indicates to activate the cell DRX configuration information of the first cell), in the first cell, a resource for transmission of an uplink common channel or signal, that is within a non-active period of cell DRX, in the first common resource is not valid (i.e., the target common resource does not include the uplink common resource within the non-active period of the cell DRX in the first common resource).

Optionally, when the cell DRX configuration information is activated (for example, the first indication information indicates to activate the cell DRX configuration information of the first cell), in the first cell, a resource for transmission of an uplink common channel or signal, that is within the active period of cell DRX, in the first common resource is valid (i.e., the target common resource includes the uplink common resource, that is within the active period of the cell DRX, in the first common resource).

Optionally, when the cell DRX configuration information is deactivated (for example, the first indication information indicates to deactivate the cell DRX configuration information of the first cell) or cell DRX is not configured, in the first cell, a resource for transmission of an uplink common channel or signal in the first common resource is valid (i.e., the target common resource includes the uplink common resource of the first common resource).

Optionally, when the first indication information indicates that the first cell is shut down, there is no resource for transmission of the common channel or signal in the first cell.

Optionally, when the first indication information indicates that the first cell is shut down, there is no resource for transmission of a downlink common channel or signal in the first cell.

Optionally, when the first indication information indicates that the first cell is shut down, there is no resource for transmission of an uplink common channel or signal in the first cell.

In some embodiments, the first indication information is carried in a second DCI format.

In some embodiments, the one or more configuration information is further used to determine second DCI format configuration information, and the second DCI format configuration information is used to determine one or more of the following:
information 2-1, configuration of the second DCI format;
information 2-2, a second search space set associated with the second DCI format;
information 2-3, a time-domain position of the second search space set;
information 2-4, a control resource set associated with the second search space set;
information 2-5, a number of information bits in the second DCI format;
information 2-6, a second RNTI associated with the second DCI format;
information 2-7, an association relationship between the first cell and the first indication information; or
information 2-8, a start location of the first indication information in the second DCI format.

The one or more configuration information being used to determine second DCI format configuration information and the second DCI format configuration information being used to determine one or more of the information 2-1 to 2-8, may also be replaced by that: the one or more configuration information is used to indicate one or more of the information 2-1 to 2-8.

For the information 2-1, it is used to indicate that the first indication information is carried in the second DCI format.

For the information 2-2, it may be a set identity of the second search space set (SSS). The second SSS is used for the terminal device to monitor the second DCI format.

For the information 2-3, it is used to indicate a time-domain position monitored when the terminal device monitors the second DCI format.

For the information 2-4, it is used to indicate a frequency-domain position monitored when the terminal device monitors the second DCI format.

For the information 2-5, it is used to indicate the size of the second DCI format.

For the information 2-6, it is used for the terminal device to monitor the second DCI format.

For the information 2-7, it is used to indicate that the first indication information carried for the terminal device is used for the first cell.

For the information 2-8, it is used to indicate a start location where the first DCI format is located in the second DCI format.

In some embodiments, the terminal device receiving first indication information includes that:
the terminal device receives the first indication information based on the second DCI format configuration information.

In some embodiments, the network device sending the first indication information to the terminal device includes that:
the network device sends the first indication information to the terminal device based on the second DCI format configuration information.

Optionally, the terminal device performs monitoring of the second DCI format based on one or more of the information 2-1 to 2-6 determined by the one or more configuration information, and parses the first indication information based on the information 2-7 and 2-8.

In some embodiments, a start location of a valid duration for deactivation or activation of the cell DRX and/or cell DTX configuration information of the first cell is determined by one of the following manners:
start location determination manner 2-1, the start location being a start location of a second period in which the second DCI format is received;
start location determination manner 2-2, the start location being an end location of a second period in which the second DCI format is received;
start location determination manner 2-3, the start location being a start location of a next second period upon reception of the second DCI format;
start location determination manner 2-4, the start location being a start location of a first slot after a second delay duration upon reception of the second DCI format;
start location determination manner 2-5, the start location being a start location of a next second period after a second delay duration upon reception of the second DCI format; or
start location determination manner 2-6, the start location being indicated by the second DCI format;
start location determination manner 2-7, a time interval between the start location and a time-domain resource at which the second DCI format is received being pre-configured or predefined.

Here, the second period is a period associated with the cell DRX and/or cell DTX configuration information of the first cell.

Optionally, the start location of the valid duration for activation or deactivation of the cell DRX and/or cell DTX configuration of the first cell may be replaced with the start location of the valid duration of the first indication information.

The start location determination manners 2-1 to 2-8 differ from the start location determination manners 1-1 to 1-8 as follows. The start location determined using the starting position determination manners 2-1 to 2-8 is the start location of the valid duration for activation or deactivation of the cell DTX and/or cell DRX configuration of the first cell, the start location determined using the start location determination manners 1-1 to 1-8 is the start location of the valid duration of the first resource configuration information. For the detailed implementation of the start location determination manners 2-1 to 2-8, reference may be made to the description of the start location determination manners 1-1 to 1-8, which is not repeated here.

Optionally, the length of the first delay duration and the length of the second delay duration may be the same or different.

Optionally, the second delay duration is related to subcarrier spacing. The second delay duration varies with different subcarrier spacings.

In some embodiments, a length of the valid duration for deactivation or activation of the cell DRX and/or cell DTX configuration information of the first cell is determined by one of the following manners:
length determination manner 2-1, the length being a pre-configured or predefined value;
length determination manner 2-2, the length being a pre-configured duration of a second timer; or
length determination manner 2-3, the length being determined based on change of the active or inactive state indicated by the first indication information.

For the length determination manner 2-2, the length of the valid duration for activation or deactivation of the cell DTX and/or cell DRX configuration information of the first cell is the duration of the second timer. Then, the terminal device starts or restarts the second timer at a start time when the activation or deactivation of the cell DTX and/or cell DRX configuration information of the first cell takes valid. When the second timer expires, the terminal device deactivates or activates the cell DTX and/or cell DRX configuration information of the first cell. That is, the active state of the cell DTX and/or cell DRX configuration information of the first cell changes.

For the length determination manner 2-3, if the first indication information indicating to activate the cell DTX and/or cell DRX configuration information of the first cell, then the cell DTX and/or cell DRX configuration information of the first cell is activated all the time before the next first indication information for indicating to deactivate the cell DTX and/or cell DRX configuration information of the first cell arrives. Upon receiving the first indication information that indicates to activate the cell DTX and/or cell DRX configuration information of the first cell, the cell DTX and/or cell DRX configuration information of the first cell is deactivated.

Optionally, the terminal device determines a second time window based on the start location of the valid duration for activation or deactivation of the cell DTX and/or cell DRX configuration information of the first cell and the length of the valid duration for activation or deactivation of the cell DTX and/or cell DRX configuration information of the first cell. Here, the activation or deactivation of the cell DTX and/or cell DRX configuration information of the first cell indicated by the first indication information takes valid within the second time window, or the first indication information is valid within the second time window.

In some embodiments, the length is in unit of one of the following:
length of a second period, slot, subframe, half frame, frame, millisecond, or second.

The second period is a period associated with cell DRX and/or cell DTX of the first cell.

In some embodiments, when the one or more configuration information include cell DRX and/or cell DTX configuration information of M cells, the second DCI format includes M indication information, where each indication information is used to activate or deactivate cell DRX and/or cell DTX configuration information of a respective cell associated with the indication information.

Here, the M indication information contained in the second DCI format includes the first indication information associated with the first cell.

In some embodiments, the first indication information is further used to determine that there is no resource for transmission of the common channel or signal in the first cell; or the second DCI format is further used to determine that there is no resource for transmission of an uplink common channel or signal in the first cell.

Optionally, when the first indication information indicates a preset value, the first indication information is used to indicate that there is no resource for transmission of the common channel or signal in the first cell. In this case, it may be considered that the first cell is shut down, and there is no resource for transmission of the common channel or signal in the first cell. As an example, when bits in the first indication information all indicate 0 or all 1, it represents that the first cell is shut down or there is no resource for transmission of the common channel or signal in the first cell.

Optionally, in addition to the first indication information, the second DCI format further includes information for indicating cell shutdown. As an example, when the information for indicating cell shutdown in the second DCI format indicates cell shutdown, one or more cells including the first cell associated with the second DCI format are all shut down, and there is no resource for transmission of the common channel or signal in each of the one or more cells. In some cases, the one or more cells include a Primary cell and/or Primary Secondary Cell for the terminal device.

In some embodiments, the first indication information is carried in a second MAC CE signaling.

In some embodiments, the start location of the valid duration for activation or deactivation of the cell DRX and/or cell DTX configuration information of the first cell is a start location of a valid duration of the second MAC CE signaling.

In some embodiments, when the one or more configuration information include cell DRX and/or cell DTX configuration information of M cells, the second MAC CE signaling includes M indication information. Each indication information is used to activate or deactivate cell DRX and/or cell DTX configuration information of a respective cell associated with the indication information.

Here, the M indication information contained in the second MAC CE signaling include the first indication information associated with the first cell.

In some embodiments, the first indication information is further used to determine that there is no resource for transmission of the common channel or signal in the first cell; or the second MAC CE signaling is further used to determine that there is no resource for transmission of the common channel or signal in the first cell.

Optionally, when the first indication information indicates a preset value, the first indication information is used to indicate that there is no resource for transmission of the common channel or signal in the first cell. In this case, it may be considered that the first cell is shut down, and there is no resource for transmission of the common channel or signal in the first cell. As an example, when bits in the first indication information all indicate 0 or all 1, it represents that the first cell is shut down or there is no resource for transmission of the common channel or signal in the first cell.

Optionally, in addition to the first indication information, the second MAC CE signaling further includes information for indicating cell shutdown. As an example, when the information for indicating cell shutdown in the second MAC CE signaling indicates cell shutdown, the first cell associated with the second MAC CE signaling is shut down.

In some embodiments, the method further includes:
when the first indication information is used to indicate to activate or deactivate the cell DRX and/or cell DTX configuration information of the first cell, the terminal device determines the resource used for transmission of the common channel or signal in the first cell based on an active or inactive state of the cell DRX and/or cell DTX configuration information of the first cell; or
when the first indication information is used to indicate that the first cell is shut down, the terminal device determines that there is no resource for transmission of the common channel or signal in the first cell.

The following are examples of how the terminal device determines the target common resource in the first cell based on the first indication information and the first resource configuration information.

As an example, the one or more configuration information include the first resource configuration information and cell DTX configuration information, where the first resource configuration information is used to determine the first common resource. The terminal device monitors the second DCI format, and the first indication information in the second DCI format is used to indicate to activate or deactivate the cell DTX configuration for the first cell. When the first indication information in the second DCI format received by the terminal device indicates to activate the cell DTX configuration of the first cell, from the start location of the valid duration of the first indication information, the terminal device determines that the target common resource in the first cell does not include downlink common resources within the non-active period of cell DTX in the first common resource. When the first indication information in the second DCI format by the terminal device indicates to deactivate the cell DTX configuration of the first cell, from the start location of the valid duration of the first indication information, the terminal device determines that the target common resource in the first cell includes downlink common resources within the first common resource. It may be understood that, uplink common resources are not affected by the cell DTX configuration. If the first common resource includes uplink common resources, then the target common resource in the first cell includes the uplink common resources in the first common resource.

As another example, the one or more configuration information include the first resource configuration information and cell DRX configuration information, where the first resource configuration information is used to determine the first common resource. The terminal device monitors the second DCI format, and the first indication information in the second DCI format is used to indicate to activate or deactivate the cell DRX configuration of the first cell. When the first indication information in the second DCI format received by the terminal device indicates to activate the cell DRX configuration of the first cell, from the start location of the valid duration of the first indication information, the terminal device determines that the target common resource in the first cell does not include uplink common resources within the non-active period of cell DTX in the first common resource. When the first indication information in the second DCI format received by the terminal device indicates to deactivate the cell DRX configuration of the first cell, from the start location of the valid duration of the first indication information, the terminal device determines that the target common resource in the first cell includes uplink common resources within the first common resource. It may be understood that, downlink common resources are not affected by the cell DRX configuration. If the first common resource includes downlink common resources, then the target common resource in the first cell includes the downlink common resources in the first common resource.

The following is description of the first resource configuration information provided by the embodiments of the present application.

In some embodiments, the first resource configuration information at least includes one or more of the following:
a period of the common channel or signal;
a time-domain position of the common channel or signal;
a frequency-domain of the common channel or signal;
a transmit power of the common channel or signal or a parameter for determining the transmit power;
an antenna port of the common channel or signal;
an antenna port or an index or a configuration index of a reference signal associated with the common channel or signal; or

Quasi-Co-Location (QCL) association relationship or transmission configuration indication (TCI) state indication for the common channel or signal.

In embodiments of the present application, among the N resource configuration information, one or more of the above included in different resource configuration information are different.

In some embodiments, the common channel or signal includes one or two of the following:
a downlink common channel or signal; or
an uplink common channel or signal.

In some embodiments, the downlink common channel or signal at least includes one or more of the following:
a synchronization signal/PBCH block (SSB);
a system information block Type1 (SIB1);
one or more SIBs except SIB1;
a paging message;
a common PDCCH; or
a Channel State Information Reference Signal (CSI-RS).

Optionally, the CSI-RS is used for the terminal device to perform time-frequency synchronization and/or RRM measurement. For example, the CSI-RS is Tracking Reference Signal (TRS), and the terminal device performs time-frequency synchronization based the TRS.

Optionally, the CSI-RS is used for the terminal device to perform positioning measurement. For example, the CSI-RS is Positioning Reference Signal (PRS), and the terminal device performs positioning measurement based the PRS.

In some embodiments, the uplink common channel or signal at least includes one or more of the following:
a Physical Random Access Channel (PRACH);
a message A (msgA);
a Sounding Reference Signal (SRS); or
a common physical uplink control channel (PUCCH).

The MsgA includes PRACH and Physical Uplink Shared Channel (PUSCH). The MsgA is the first step of a two-step random access procedure.

Optionally, the SRS is used for the network device to perform time-frequency synchronization and/or positioning measurement.

Optionally, the common PUCCH is used for the terminal device to send request information. For example, the common PUCCH is used for one or more terminal devices to send scheduling request. For another example, the common PUCCH is used to request a network device to send at least one of the following information: SSB, SIB1, one or more of other SIBs except the SIB1, or CSI-RS.

In an example, the common channel or signal includes SSB/SIB1, and resource configuration information for the common channel or signal includes a period of the common channel or signal and an index of a reference signal associated with the common channel or signal. At least two resource configurations of the common channel or signal include resource configuration 1 and resource configuration 2. Here, the resource configuration 1 is used to configure that the period of SSB/SIB1 is 20ms and the indexes of transmitted SSBs are SSB0, SSB1, SSB2 and SSB3. The resource configuration 2 is used to configure that the period of SSB/SIB1 is 160ms and the indexes of transmitted SSBs are SSB0 and SSB2.

In one example, the common channel or signal includes SSB/SIB1/other SIB information except SIB1, and the resource configuration information of the common channel or signal includes the parameter for determining the transmit power. At least two resource configurations of the common channel or signal include a first common resource configuration and a second common resource configuration. The first common resource configuration and the second common resource configuration are used to determine that transmit powers of the common channels or signals are a first transmit power and a second transmit power, respectively. Herein, the first common resource configuration and the second common resource configuration may be used to directly configure the first transmit power and the second transmit power, or may be used to configure the first transmit power and a first transmit power offset, and the second transmit power is determined based on the first transmit power and the first transmit power offset.

In one example, the common channel or signal includes PRACH, and the resource configuration information of the common channel or signal includes a PRACH reception threshold. At least two resource configurations of the common channel or signal include a first common resource configuration and a second common resource configuration. The first common resource configuration and the second common resource configuration are used to configure a first PRACH reception threshold and a second PRACH reception threshold. Herein, the terminal device may determine a first transmit power for sending of PRACH based on the first PRACH reception threshold, and determine a second transmit power for sending of PRACH based on the second PRACH reception threshold.

In one example, the common channel or signal includes PRACH, and the resource configuration information of the common channel or signal includes a PRACH configuration index. At least two resource configurations of the common channel or signals include a first common resource configuration and a second common resource configuration. The first common resource configuration and the second common resource configuration include a first PRACH configuration index and a second PRACH configuration index. Herein, the terminal device may determine that the PRACH resource is associated with a first period based on the first PRACH configuration index, and determine that the PRACH resource is associated with a second period based on the second PRACH configuration index.

In some embodiments, the one or more configuration information is acquired by the terminal device through system information. Optionally, the network device sends the one or more configuration information to the terminal device through system information.

In the embodiments of the present application, the one or more configuration information acquired by the terminal device include first resource configuration information, and may also be used to determine one or more of the following: N resource configuration information, DCI format configuration information (first DCI format configuration information or second DCI format configuration information), and DTX/DRX configuration of cell. The one or more configuration information may be obtained through one or more signaling, and different signaling may be used for configuration of different configuration information.

In the method for channel or signal transmission of the embodiments of the present application, the following four resource determination manners are provided:
resource determination manner 1, configuring at least two resource configurations of the common channel or signal, and indicating, via DCI, which resource configuration of the common channel or signal is currently used;
resource determination manner 2, configuring at least two resource configurations of the common channel or signal, and indicating, via MAC CE, which resource configuration of the common channel or signal is currently used;
resource determination manner 3, configuring common DTX and/or DRX configurations of one or more cells, and indicating, via DCI, to activate or deactivate the common DTX and/or DRX configurations of the one or more cells; or
resource determination manner 4, configuring common DTX and/or DRX configurations of one or more cells, and indicating, via MAC CE, to activate or deactivate the cell common DTX and/or DRX configurations of the of one or more cells.

The resource determination manners 1 to 4 are applied to scenarios where a cell is enabled with an energy saving mode. For ease of description, such a cell is referred to as an energy saving cell. When a cell enters an energy saving mode, terminal devices need to acquire information about the resource configuration of the common channel or signal configured/updated by a network device, and legacy terminal devices do not have the capability to read the information about the resource configuration of the common channel or signal configured/updated by the network device. Thus, the network device in the energy saving cell needs to configure a new serving cell for legacy terminal devices in the connected state via a handover command, for handing them over to a non-energy saving cell, and/or prohibit legacy terminal devices in idle/inactive state from accessing the energy saving cell via a bar command. In this way, impacts on legacy terminal devices when the cell enters the energy saving mode can be avoided.

The network device may dynamically adjust the resource configurations for transmission of the common channel or signal by adopting at least one of the above manners, so that the resource for transmission of the common channel or signal can be adapted to service traffic in the system, thereby realizing network energy saving.

The channel or signal transmission method provided in the embodiments of the present application is applicable to terminal devices supporting Network Energy Saving (NES) capability in an idle state/inactive state/connected state.

For a terminal device supporting NES capability, a message of configuration update from the network device may be acquired by means of at least one of the resource determination manners 1 to 4. It should be understood that the resource determination manners 1 to 4 are applicable to terminal devices supporting NES capability in an idle state/inactive state/connected state.

The following gives illustrative examples of the resource determination manners 1 and 3.

### Resource determination manner 1

The network device configures at least two resource configurations of a common channel or signal for a first cell, including a first common resource configuration and a second common resource configuration. The resource configuration of the common channel or signal may be understood as resource configuration information. The network device further configures the terminal device to monitor the first DCI format. The first DCI format includes first indication information, where the first indication information is used to determine a target common resource configuration in the at least two resource configurations of the common channel or signal for the first cell.

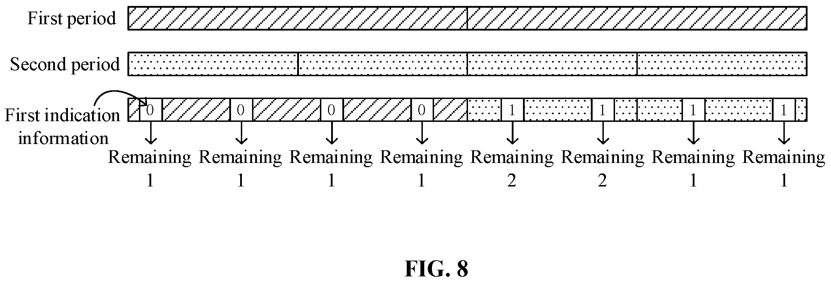

As illustrated in FIG. 8, the length of a first period associated with the first common resource configuration is twice the length of a second period associated with the second common resource configuration. The start point of a valid time window of the first indication information is the start location of a period during which the first DCI format is received by the terminal device. When the first indication information indicates "0", the target common resource configuration is the first common resource configuration. When the first indication information indicates "1", the target resource configuration is the second common resource configuration. The first DCI format is further used to indicate the remaining duration of a valid time window of the target common resource configuration, where the unit of the window length is the length of a period associated with the target common resource configuration. As illustrated in FIG. 8, if the first indication information in the first DCI format indicates "0" and the remaining duration of the valid duration indicated by the first DCI format is 1, it represents that the first common resource configuration takes valid within a first period in which the first DCI format is received, associated with a current first common resource configuration. After the first period ends, if the first indication information in the first DCI format indicates "1" and the remaining duration of the valid duration indicated by the first DCI format is 2, it represents that the second common resource configuration takes valid within a second period in which the first DCI format is received, associated with a current second common resource configuration, and a next second period.

In another example, when the first indication information indicates "1", the target common resource configuration is the first common resource configuration. When the first indication information indicates "0", the target resource configuration is the second common resource configuration. The start of the valid time window of the target resource configuration is a start location of a next period after a first delay duration upon reception of the first DCI format by the terminal device. The length of the valid duration of the target common resource configuration is pre-configured or predefined.

The terminal device monitors the first DCI format. If the current common resource is the first common resource configuration, when the first indication information in the first DCI format received by the terminal device indicates "1", the terminal device determines that the target common resource is the first common resource configuration. When the first indication information in the first DCI format received by the terminal device indicates "0", from the next period after a first delay duration upon reception of the first DCI format, the terminal device determines that the target common resource is the second common resource configuration. If the current common resource is the second common resource configuration, when the first indication information in the first DCI format received by the terminal device indicates "0", the terminal device determines that the target common resource is the second common resource configuration. When the terminal device receives the first indication information in the first DCI format received by the terminal device indicates "1", from the next period after a first delay duration upon reception of the first DCI format, the terminal device determines that the target common resource is the first common resource configuration.

### Resource determination manner 3

The network device configures cell DTX and/or cell DRX configurations for one or more cells, and the common DTX and/or cell DRX configuration of the one or more cells include the cell DRX and/or cell DTX configuration of the first cell. The network device further configures the terminal device to monitor the second DCI format. The second DCI format includes second indication information, and the second indication information is used to indicate to activate or deactivate the cell DTX and/or cell DRX configuration of the first cell.

The valid duration of the cell DTX and/or cell DRX configuration starts from a start location of a next cell DTX and/or cell DRX period after a second delay duration upon reception of the second DCI format; or, the valid duration of the cell DTX and/or cell DRX configuration starts from a next slot after a second delay duration upon reception of the second DCI format; or, the valid duration of the cell DTX and/or cell DRX configuration is the start location of a cell DTX and/or cell DRX period in which the second DCI format is received.

Optionally, the length of the second delay duration and the length of the first delay duration are the same.

Optionally, the length of the second delay duration is determined according to table 1 below.

**Table 1 Examples of delay duration**

| Subcarrier spacing of PDCCH (kHz) | delay duration (slot) |
|---|---|
| 15 | 3 |
| 30 | 6 |
| 60 | 12 |
| 120 | 24 |
| 480 | 96 |
| 960 | 192 |

In the network energy saving system, according to the method for channel or signal transmission provided by the present application, the resource configurations for transmission of a common channel or signal in the first cell are dynamically adjusted through the first indication information, so that the resource for transmission of the common channel or signal can be adapted to service traffic in the system, thereby achieving network energy saving.

The preferred embodiments of the present application have been described in detail above with reference to the accompanying drawings, but the present application is not limited to the specific details in the above-described embodiments. Various simple modifications can be made to the technical solutions of the present application within the scope of the technical concept of the present application, and these simple modifications all fall within the scope of protection of the present application. For example, various specific technical features described in the above-described detailed description may be combined in any suitable manner without contradiction, and various possible combinations will not be described separately in this application in order to avoid unnecessary repetition. For another example, various embodiments of the present application may be combined arbitrarily, and as long as they do not violate the idea of the present application, they should also be regarded as the disclosure of the present application. For another example, on the premise that there is no conflict, various embodiments described in the present application and/or the technical features in each embodiment may be arbitrarily combined with the prior art, and the technical solution obtained after the combination should also fall within the scope of protection of the present application.

It should also be understood that in various method embodiments of the present application, the size of the sequence number of the above-described processes does not mean the order of execution, and the order of execution of various processes should be determined by their functions and internal logics, and should not constitute any limitation on the implementation of the embodiments of the present application. In addition, in the embodiments of the present application, the terms "downlink", "uplink", and "sidelink" are used to indicate the transmission direction of signals or data, where "downlink" is used to indicate that the transmission direction of signals or data is a first direction transmitted from a site to user equipment of a cell, "uplink" is used to indicate that the transmission direction of signals or data is a second direction transmitted from the user equipment of the cell to the site, and "sidelink" is used to indicate that the transmission direction of signals or data is a third direction transmitted from the user equipment 1 to the user equipment 2. For example, "downlink signal" indicates that the transmission direction of the signal is the first direction. In addition, in the embodiments of the present application, the term "and/or" is only one kind of association relationship that describes associated objects, and indicates that there may be three kinds of relationships. Specifically, A and/or B may represent the following three situations: i.e., independent existence of A, existence of both A and B and independent existence of B. In addition, the character "/" in the present disclosure generally represents that an "or" relationship is formed between the previous and next associated objects.

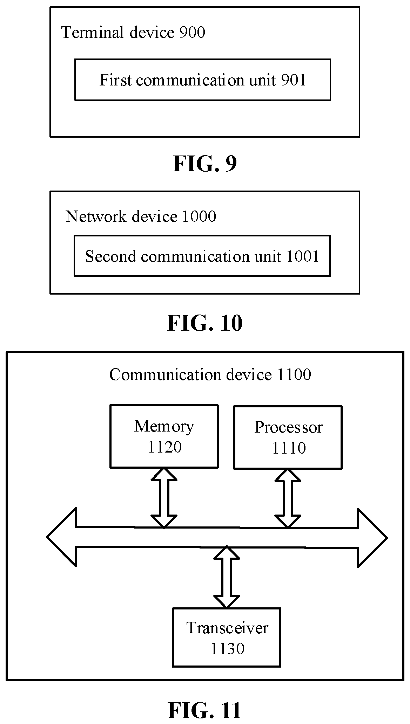

FIG. 9 is a schematic structure diagram of a terminal device provided by an embodiment of the present application. As illustrated in FIG. 9, the terminal device 900 includes a first communication unit 901.

The first communication unit 901 is configured to acquire one or more configuration information, the one or more configuration information including first resource configuration information, and the first resource configuration information being used to configure a resource for transmission of a common channel or signal in a first cell.

The first communication unit 901 is further configured to receive first indication information, the first indication information being used to determine a resource used for transmission of the common channel or signal in the first cell.

In some embodiments, the one or more configuration information includes N resource configuration information, N being a positive integer; or
the one or more configuration information includes M resource configuration information groups associated with M cells, each of the M resource configuration information groups being used to configure a resource for transmission of a common channel or signal in a cell, where the first resource configuration information group in the M resource configuration information groups includes N resource configuration information, M and N being positive integers.

Herein, each of the N resource configuration information is used to configure a resource for transmission of a common channel or signal in the first cell, and the N resource configuration information includes the first resource configuration information.

In some embodiments, the first indication information being used to determine the resource used for transmission of the common channel or signal in the first cell, includes:
the first indication information being used to determine the first resource configuration information from the N resource configuration information, and the first resource configuration information being used to determine the resource used for transmission of the common channel or signal in the first cell.

In some embodiments, the first indication information is carried in a first downlink control information (DCI) format.

In some embodiments, the one or more configuration information is further used to determine first DCI format configuration information, and the first DCI format configuration information is used to determine one or more of the following:
configuration of the first DCI format;
a first search space set associated with the first DCI format;
a time-domain position of the first search space set;
a control resource set associated with the first search space set;
a number of information bits in the first DCI format;
a first radio network temporary identity (RNTI) associated with the first DCI format;
an association relationship between the first cell and the first indication information; or
a start location of the first indication information in the first DCI format.

In some embodiments, the first communication unit 901 is further configured to receive the first indication information based on the first DCI format configuration information.

In some embodiments, a start location of a valid duration of the first resource configuration information is determined by one of the following:
the start location being a start location of a first period in which the first DCI format is received;
the start location being an end location of a first period in which the first DCI format is received;
the start location being a start location of a next first period after the first DCI format is received;
the start location being a start location of a first slot after a first delay duration upon reception of the first DCI format;
the start location being a start location of a next first period after a first delay duration upon reception of the first DCI format;
the start location being indicated by the first DCI format; or
a time interval between the start location and a time-domain resource at which the first DCI format is received being pre-configured or predefined.

Here, the first period is a period associated with the first resource configuration information.

In some embodiments, a length of the valid duration of the first resource configuration information is determined by one of the following:
the length being a pre-configured or predefined value;
the length being a pre-configured duration of a first timer; or
the length being indicated by the first DCI format.

In some embodiments, in a case of the length being indicated by the first DCI format, the length indicated by the first DCI format is a remaining duration of the valid duration of the first resource configuration information.

In some embodiments, when the one or more configuration information include M resource configuration information groups, the first DCI format includes M indication information. Each indication information is used to determine a resource for transmission of a common channel or signal in a respective cell associated with the indication information.

In some embodiments, the N resource configuration information include one resource configuration information for determining that there is no resource for transmission of the common channel or signal in the first cell; or
the first indication information is further used to determine that there is no resource for transmission of the common channel or signal in the first cell; or
the first DCI format is further used to determine that there is no resource for transmission of the common channel or signal in the first cell.

In some embodiments, the first indication information is carried in a first MAC CE signaling.

In some embodiments, the start location of the valid duration of the first resource configuration information is a start location of a valid duration of the first MAC CE signaling; and/or
a length of the valid duration of the first resource configuration information is a pre-configured or predefined value.

In some embodiments, the length is in unit of one of the following:
length of a first period, slot, subframe, half frame, frame, millisecond, or second.

Here, the first period is a period associated with the first resource configuration information.

In some embodiments, when the one or more configuration information include M resource configuration information groups, the first MAC CE signaling includes M indication information. Each indication information is used to determine a resource for transmission of a common channel or signal in a respective cell associated with the indication information.

In some embodiments, the N resource configuration information include one resource configuration information for determining that there is no resource for transmission of the common channel or signal in the first cell; or
the first indication information is further used to determine that there is no resource for transmission of the common channel or signal in the first cell; or
the first MAC CE signaling is further used to determine that there is no resource for transmission of the common channel or signal in the first cell.

In some embodiments, the terminal device 900 further includes a first determination unit.

The first determination unit is configured to determine a resource used for transmission of the common channel or signal in the first cell based on the first resource configuration information.

In some embodiments, the one or more configuration information further include cell discontinuous reception (DRX) configuration information and/or cell discontinuous transmission (DTX) configuration information of the first cell; or
the one or more configuration information include cell DRX and/or cell DTX configuration information of M cells, and the cell DRX and/or the cell DTX configuration information of the M cells includes the cell DRX and/or cell DTX configuration information of the first cell.

In some embodiments, the first indication information being used to determine a resource used for transmission of the common channel or signal in the first cell, includes that:
the first indication information is used to indicate to activate or deactivate the cell DRX and/or cell DTX configuration information of the first cell, and an active or inactive state of the cell DRX and/or cell DTX configuration information of the first cell is used to determine the resource used for transmission of the common channel or signal in the first cell; or
the first indication information is used to indicate that the first cell is shutdown.

In some embodiments, the first indication information is carried in a second DCI format.

In some embodiments, the one or more configuration information is further used to determine second DCI format configuration information, and the second DCI format configuration information is used to determine one or more of the following:
configuration of the second DCI format;
a second search space set associated with the second DCI format;
a time-domain position of the second search space set;
a control resource set associated with the second search space set;
a number of information bits in the second DCI format;
a second RNTI associated with the second DCI format;
an association relationship between the first cell and the first indication information; or
a start location of the first indication information in the second DCI format.

In some embodiments, the first communication unit 901 is further configured to receive the first indication information based on the second DCI format configuration information.

In some embodiments, a start location of a valid duration for deactivation or activation of the cell DTX and/or cell DRX configuration information of the first cell is determined by one of the following manners:
the start location being a start location of a second period in which the second DCI format is received;
the start location being an end location of a second period in which the second DCI format is received;
the start location being a start location of a next second period after the second DCI format is received;
the start location being a start location of a first slot after a second delay duration upon reception of the second DCI format;
the start location being a start location of a next second period after a second delay duration upon reception of the second DCI format; or
the start location being indicated by the second DCI format; or
a time interval between the start location and a time-domain resource at which the second DCI format is received being pre-configured or predefined;

Here, the second period is a period associated with the cell DRX and/or cell DTX configuration information of the first cell.

In some embodiments, a length of the valid duration for deactivation or activation of the cell DRX and/or cell DTX configuration information of the first cell is determined by one of the following manners:
the length being a pre-configured or predefined value;
the length being a pre-configured duration of a second timer; or
the length being determined based on the active or inactive state indicated by the first indication information.

In some embodiments, the length is in unit of one of the following:
length of a second period, slot, subframe, half frame, frame, millisecond, or second.

Here, the second period is a period associated with the cell DRX and/or cell DTX configuration information of the first cell.

In some embodiments, when the one or more configuration information include cell DRX and/or cell DTX configuration information of M cells, the second DCI format includes M indication information. Each indication information is used to determine a resource for activation or deactivation of cell DRX and/or cell DTX configuration information of a respective cell associated with the indication information.

In some embodiments, the first indication information is further used to determine that there is no resource for transmission of the common channel or signal in the first cell; or
the second DCI format is further used to determine that there is no resource for transmission of the common channel or signal in the first cell.

In some embodiments, the first indication information is carried in a second MAC CE signaling.

In some embodiments, the start location of the valid duration for activation or deactivation of the cell DRX and/or cell DTX configuration information of the first cell is a start location of a valid duration of the second MAC CE signaling.

In some embodiments, when the one or more configuration information include cell DRX and/or cell DTX configuration information of M cells, the second MAC CE signaling includes M indication information, where each indication information is used to activate or deactivate cell DRX and/or cell DTX configuration information in a respective cell associated with the indication information.

In some embodiments, the first indication information is further used to determine that there is no resource for transmission of the common channel or signal in the first cell; or
the second MAC CE signaling is further used to determine that there is no resource for transmission of the common channel or signal in the first cell.

In some embodiments, the terminal device 900 includes a second determination unit.

The second determination unit is configured to:
when the first indication information indicates to activate or deactivate the cell DRX and/or cell DTX configuration information of the first cell, determine the resource used for transmission of the common channel or signal in the first cell based on an active or inactive state of the cell DRX and/or cell DTX configuration information of the first cell; or
when the first indication information indicates that the first cell is shut down, determine that there is no resource for transmission of the common channel or signal in the first cell.

In some embodiments, the first resource configuration information at least includes one or more of the following:
a period of the common channel or signal;
a time-domain position of the common channel or signal;
a frequency-domain of the common channel or signal;
a transmit power of the common channel or signal or a parameter for determining the transmit power;
an antenna port of the common channel or signal;
an antenna port or an index or a configuration index of a reference signal associated with the common channel or signal; or

Quasi-Co-Location (QCL) association relationship or transmission configuration indication (TCI) state indication for the common channel or signal.

In some embodiments, the common channel or signal includes one or two of the following:
a downlink common channel or signal; or
an uplink common channel or signal.

In some embodiments, the downlink common channel or signal at least includes one or more of the following:
a synchronization signal/PBCH block (SSB);
a system information block Type1 (SIB1);
one or more SIBs except SIB1;
a paging message;
a common physical downlink control channel (PDCCH); or
a channel state information reference signal (CRI-RS).

In some embodiments, the uplink common channel or signal at least includes one or more of the following:
a physical random access channel (PRACH);
a message A (msgA);
a sounding reference signal (SRS); or
a common physical uplink control channel (PUCCH).

In some embodiments, the first communication unit 901 is further configured to acquire the one or more configuration information through system information.

FIG. 10 is a schematic structural diagram of a network device provided by an embodiment of the present application. As illustrated in FIG. 10, the network device 1000 includes a second communication unit 1001.

The second communication unit 1001 is configured to send one or more configuration information to a terminal device. The one or more configuration information include first resource configuration information, and the first resource configuration information is used to configure a resource for transmission of a common channel or signal in a first cell.

The second communication unit 1001 is further configured to send first indication information to the terminal device, the first indication information being used to determine a resource used for transmission of the common channel or signal in the first cell.

In some embodiments, the one or more configuration information includes N resource configuration information, N being a positive integer; or
the one or more configuration information includes M resource configuration information groups associated with M cells, each of the M resource configuration information groups being used to configure a resource for transmission of a common channel or signal in a cell, where the first resource configuration information group in the M resource configuration information groups includes N resource configuration information, M and N being positive integers;

Here, each of the N resource configuration information is used to configure a resource for transmission of a common channel or signal in the first cell, and the N resource configuration information includes the first resource configuration information.

In some embodiments, the first indication information being used to determine a resource used for transmission of the common channel or signal in the first cell, includes that:
the first indication information is used to determine the first resource configuration information in the N resource configuration information, and the first resource configuration information is used to determine the resource u for transmission of the common channel or signal in the first cell.

In some embodiments, the first indication information is carried in a first downlink control information (DCI) format.

In some embodiments, the one or more configuration information is further used to determine first DCI format configuration information, and the first DCI format configuration information is used to determine one or more of the following:
configuration of the first DCI format;
a first search space set associated with the first DCI format;
a time-domain position of the first search space set;
a control resource set associated with the first search space set;
a number of information bits in the first DCI format;
a first radio network temporary identity (RNTI) associated with the first DCI format;
an association relationship between the first cell and the first indication information; or
a start location where the first indication information is located in the first DCI format.

In some embodiments, the second communication unit is further configured to send the first indication information to the terminal device based on the first DCI format configuration information.

In some embodiments, a start location of a valid duration of the first resource configuration information is determined by one of the following manners:
the start location being a start location of a first period in which the first DCI format is received;
the start location being an end location of a first period in which the first DCI format is received;
the start location being a start location of a next first period after the first DCI format is received;
the start location being a start location of a first slot after a first delay duration upon reception of the first DCI format;
the start location being a start location of a next first period after a first delay duration upon reception of the first DCI format; or
the start location being indicated by the first DCI format; or
a time interval between the start location and a time-domain resource at which the first DCI format is received being pre-configured or predefined.

Herein, the first period is a period associated with the first resource configuration information.

In some embodiments, a length of a valid duration of the first resource configuration information is determined by one of the following manners:
the length being a pre-configured or predefined value;
the length being a pre-configured duration of a first timer; or
the length being indicated by the first DCI format.

In some embodiments, in a case of the length being indicated by the first DCI format, the length indicated by the first DCI format is a remaining duration of the valid duration of the first resource configuration information.

In some embodiments, when the one or more configuration information include M resource configuration information groups, the first DCI format includes M indication information, where each indication information is used to determine a resource for transmission of a common channel or signal in a respective cell associated with the indication information.

In some embodiments, the N resource configuration information include one resource configuration information for determining that there is no resource for transmission of the common channel or signal in the first cell; or
the first indication information is further used to determine that there is no resource for transmission of the common channel or signal in the first cell; or
the first DCI format is further used to determine that there is no resource for transmission of the common channel or signal in the first cell.

In some embodiments, the first indication information is carried in a first MAC CE signaling.

In some embodiments, the start location of the valid duration of the first resource configuration information is a start location of a valid duration of the first MAC CE signaling; and/or
a length of the valid duration of the first resource configuration information is a pre-configured or predefined value.

In some embodiments, the length is in unit of one of the following:
length of a first period, slot, subframe, half frame, frame, millisecond, or second.

Here, the first period is a period associated with the first resource configuration information.

In some embodiments, when the one or more configuration information include M resource configuration information groups, the first MAC CE signaling includes M indication information, where each indication information is used to determine a resource for transmission of a common channel or signal in a respective cell associated with the indication information.

In some embodiments, the N resource configuration information include one resource configuration information for determining that there is no resource for transmission of the common channel or signal in the first cell; or
the first indication information is further used to determine that there is no resource for transmission of the common channel or signal in the first cell; or
the first MAC CE signaling is further used to determine that there is no resource for transmission of the common channel or signal in the first cell.

In some embodiments, the one or more configuration information further include cell discontinuous reception (DRX) configuration information and/or cell discontinuous transmission (DTX) configuration information of the first cell; or
the one or more configuration information include cell DRX and/or cell DTX configuration information of M cells, and the cell DRX and/or the cell DTX configuration information of the M cells include the cell DRX and/or cell DTX configuration information of the first cell.

In some embodiments, the first indication information being used to determine a resource used for transmission of the common channel or signal in the first cell, includes that:
the first indication information is used to indicate to activate or deactivate the cell DRX and/or cell DTX configuration information of the first cell, and an active or inactive state of the cell DRX and/or cell DTX configuration information of the first cell is used to determine the resource used for transmission of the common channel or signal in the first cell; or
the first indication information is used to indicate that the first cell is shutdown.

In some embodiments, the first indication information is carried in a second DCI format.

In some embodiments, the one or more configuration information is further used to determine second DCI format configuration information, and the second DCI format configuration information is used to determine one or more of the following:
configuration of the second DCI format;
a second search space set associated with the second DCI format;
a time-domain position of the second search space set;
a control resource set associated with the second search space set;
a number of information bits in the second DCI format;
a second RNTI associated with the second DCI format;
an association relationship between the first cell and the first indication information; or
a start location of the first indication information in the second DCI format.

In some embodiments, the second communication unit 1001 is further configured to send the first indication information to the terminal device based on the second DCI format configuration information.

In some embodiments, a start location of a valid duration for deactivation or activation of the cell DTX and/or cell DRX configuration information of the first cell is determined by one of the following manners:
the start location being a start location of a second period in which the second DCI format is received;
the start location being an end location of a second period in which the second DCI format is received;
the start location being a start location of a next second period after the second DCI format is received;
the start location being a start location of a first slot after a second delay duration upon reception of the second DCI format and;
the start location being a start location of a next second period after a second delay duration upon reception of the second DCI format; or
the start location being indicated by the second DCI format; or
a time interval between the start location and a time-domain resource at which the second DCI format is received being pre-configured or predefined;

Herein, the second period is a period associated with the cell DRX and/or cell DTX configuration information of the first cell.

In some embodiments, a length of the valid duration for deactivation or activation of the cell DRX and/or cell DTX configuration information of the first cell is determined by one of the following manners:
the length being a pre-configured or predefined value ;
the length being a pre-configured duration of a second timer; or
the length being determined based on the active or inactive state indicated by the first indication information.

In some embodiments, the length is in unit of one of the following:
length of a second period, slot, subframe, half frame, frame, millisecond, or second.

Here, the second period is a period associated with the cell DRX and/or cell DTX configuration information of the first cell.

In some embodiments, when the one or more configuration information include cell DRX and/or cell DTX configuration information of M cells, the second DCI format includes M indication information, where each indication information is used to activate or deactivate cell DRX and/or cell DTX configuration information of a respective cell associated with the indication information.

In some embodiments, the first indication information is further used to determine that there is no resource for transmission of the common channel or signal in the first cell; or
the second DCI format is further used to determine that there is no resource for transmission of the common channel or signal in the first cell.

In some embodiments, the first indication information is carried in a second MAC CE signaling.

In some embodiments, the start location of the valid duration for deactivation or activation of the cell DRX and/or cell DTX configuration information of the first cell is a start location of a valid duration of the second MAC CE signaling.

In some embodiments, when the one or more configuration information include cell DRX and/or cell DTX configuration information of M cells, the second MAC CE signaling includes M indication information, where each indication information is used to activate or deactivate cell DRX and/or cell DTX configuration information of a respective cell associated with the indication information.

In some embodiments, the first indication information is further used to determine that there is no resource for transmission of the common channel or signal in the first cell; or
the second MAC CE signaling is further used to determine that there is no resource for transmission of the common channel or signal in the first cell.

In some embodiments, the first resource configuration information at least includes one or more of the following:
a period of the common channel or signal;
a time-domain position of the common channel or signal;
a frequency-domain of the common channel or signal;
a transmit power of the common channel or signal or a parameter for determining the transmit power;
an antenna port of the common channel or signal;
an antenna port or an index or a configuration index of a reference signal associated with the common channel or signal; or
Quasi-Co-Location (QCL) association relationship or transmission configuration indication (TCI) state indication for the common channel or signal.

In some embodiments, the common channel or signal includes one or two of the following:
a downlink common channel or signal; or
an uplink common channel or signal.

In some embodiments, the downlink common channel or signal at least includes one or more of the following:
a synchronization signal/PBCH block (SSB);
a system information block Type1 (SIB1);
one or more SIBs except SIB1;
a paging message;
a common physical downlink control channel (PDCCH); or
a channel state information reference signal (CRI-RS).

In some embodiments, the uplink common channel or signal at least includes one or more of the following:
a physical random access channel (PRACH);
a message A (msgA);
a sounding reference signal (SRS); or
a common physical uplink control channel (PUCCH).

In some embodiments, the second communication unit 1001 is further configured to configure the one or more configuration information through system information.

It should be understood by those skilled in the art that the above relevant descriptions of the terminal device or network device in the embodiments of the present application may be understood with reference to the relevant descriptions of the method for channel or signal transmission in the embodiments of the present application.

FIG. 11 is a schematic structure diagram of a communication device 1100 provided by an embodiment of the present application. The communication device may be a terminal device or a network device. The communication device 1100 includes a processor 1110, and the processor 1110 may invoke and execute a computer program from the memory to implement the methods in the embodiments of the present application.

Optionally, as illustrated in FIG. 11, the communication device 1100 may further include a memory 1120. The processor 1110 may invoke and execute a computer program from the memory 1120 to implement the method in the embodiments of the present application.

The memory 1120 may be a separate device independent of the processor 1110 or may be integrated in the processor 1110.

Optionally, as illustrated in FIG. 11, the communication device 1100 may include a transceiver 1130. The processor 1110 may control the transceiver 1130 to communicate with other devices, and specifically may send information or data to other devices or receive information or data sent from other devices.

Here, the transceiver 1130 may include a transmitter and a receiver. The transceiver 1130 may further include antennas, and the number of antennas may be one or more.

Optionally, the communication device 1100 may the network device in the embodiments of the present application, and the communication device 1100 may implement corresponding processes in various methods implemented by the network device in the embodiments of the present application, which will not be elaborated herein for the sake of brevity.

Optionally, the communication device 1100 may be the mobile device/terminal device in the embodiments of the present application, and the communication device 1100 may implement corresponding processes in various methods implemented by the mobile device/terminal device in the embodiments of the present application, which will not be elaborated herein for the sake of brevity.

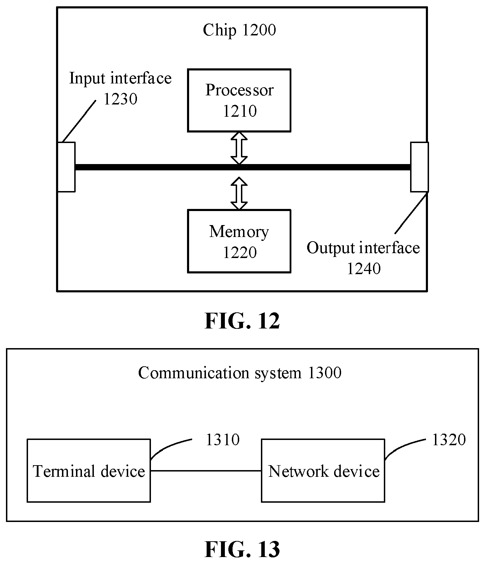

FIG. 12 is a schematic structure diagram of a chip provided by an embodiment of the present application. The chip 1200 in FIG. 12 includes a processor 1210, and the processor 1210 may invoke and execute a computer program from the memory to implement the methods in the embodiments of the present application.

Optionally, as illustrated in FIG. 12, the chip 1200 may further include a memory 1220. The processor 1210 may invoke and execute a computer program from the memory 1220 to implement the method in the embodiments of the present application.

The memory 1220 may be a separate device independent of the processor 1210 or may be integrated in the processor 1210.

Optionally, the chip 1200 may further include an input interface 1230. The processor 1210 may control the input interface 1230 to communicate with other devices or chips, and specifically may acquire information or data transmitted by other devices or chips.

Optionally, the chip 1200 may further include an output interface 1240. The processor 1210 may control the output interface 1240 to communicate with other devices or chips, specifically, may output information or data to other devices or chips.

Optionally, the chip may be applied to the network device in the embodiments of the present application, and the chip may implement corresponding processes in various methods implemented by the network device in the embodiments of the present application, which will not be elaborated herein for the sake of brevity.

Optionally, the chip may be applied to the mobile device/terminal device in the embodiments of the present application, and the chip may implement corresponding processes in various methods implemented by the mobile device/terminal device in the embodiments of the present application, which will not be elaborated herein for the sake of brevity.

It is to be understood that the chip mentioned in the embodiments of the present disclosure may also be referred to as a system-level chip, a system chip, a chip system or a system-on-chip or the like.

FIG. 13 is a schematic block diagram of a communication system 1500 provided by an embodiment of the present application. As illustrated in FIG. 13, the wireless communication system 1300 includes a terminal device 1310 and a network device 1320.

The terminal device 1310 may implement corresponding functions implemented by the terminal device in the above methods, and the network device 1320 may implement corresponding functions implemented by the terminal device in the above methods, which will not be elaborated herein for the sake of brevity.

It is to be understood that the processor of the present disclosure may be an integrated circuit chip having a signal processing capability. In implementation, the actions of the above method embodiments may be accomplished by integrated logic circuitry of hardware in the processor or instructions in the form of software. The above processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, actions and logic diagrams disclosed in the embodiments of the present disclosure. The general purpose processor may be a microprocessor or any conventional processor. The actions of the method disclosed in the embodiments of the present disclosure may be directly embodied as being executed by a hardware decoding processor or being executed by hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the actions of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It is to be noted that the memory in the systems and methods described herein is intended to include, but is not limited to, these memories and any other suitable types of memory.

It is to be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suitable types of memory.

In an embodiment of the present disclosure, there is further provided a computer-readable storage medium for storing a computer program.

Optional, the computer-readable storage medium may be applied to the network device provided by the embodiments of the present application, and the computer program causes a computer to execute corresponding processes in various method implemented by the network device in the embodiments of the present application, which will not be elaborated herein for the sake of brevity.

Optional, the computer-readable storage medium may be applied to the mobile device/terminal device in the embodiments of the present application, and the computer program causes a computer to execute corresponding processes in various method implemented by the mobile device/terminal device in the embodiments of the present application, which will not be elaborated herein for the sake of brevity.

In an embodiment of the present disclosure, there is further provided a computer program product, which includes computer program instructions.

Optional, the computer program product may be applied to the network device in the embodiments of the present application, and the computer program instructions cause a computer to execute corresponding processes in various method implemented by the network device in the embodiments of the present application, which will not be elaborated herein for the sake of brevity.

Optional, the computer program product may be applied to the mobile device/terminal device in the embodiments of the present application, and the computer program instructions cause a computer to execute corresponding processes in various method implemented by the mobile device/terminal device in the embodiments of the present application, which will not be elaborated herein for the sake of brevity.

In an embodiment of the present disclosure, there is further provided a computer program.

Optional, the computer program may be applied to the network device provided by the embodiments of the present application, and the computer program, when running on a computer, causes the computer to execute corresponding processes in various method implemented by the network device in the embodiments of the present application, which will not be elaborated herein for the sake of brevity.

Optional, the computer program may be applied to the mobile device/terminal device in the embodiments of the present application, and the computer program, when running on a computer, causes the computer to execute corresponding processes in various method implemented by the mobile device/terminal device in the embodiments of the present application, which will not be elaborated herein for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided in the present application, it should be understood that the disclosed systems, apparatuses and methods may be implemented in other manners. For example, the above-described embodiments of the apparatus are only schematic, for example, the division of the units is only a logical function division, and in practice, there may be another division manner, for example, multiple units or components may be combined or integrated into another system, or some features may be ignored or not performed. In addition, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, various functional units in various embodiments of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions may be embodied in the form of a software product. The computer software product is stored in a storage medium, and includes several instructions so that a computer device (which may be a personal computer, a server, a network device or the like) implements all or part of the method according to respective embodiments of the present application. The aforementioned storage medium includes: a USB flash disk, a mobile hard disk, a Read-Only Memory (ROM), a Random Access Memory (RAM), a magnetic disk, an optical disk, and various other media capable of storing program code.

The above is only the specific implementation of the present disclosure, but the scope of protection of the present disclosure is not limited thereto. Any person skilled in the art may easily think of changes or substitutions within the technical scope disclosed in the present application, which is to be covered within the protection scope of the present application. Therefore, the scope of protection of the present application shall comply with the scope of protection of the claims.

## Claims

1. A method for channel or signal transmission, comprising:
acquiring, by a terminal device, one or more configuration information, the one or more configuration information comprising first resource configuration information, and the first resource configuration information being used to configure a resource for transmission of a common channel or signal in a first cell; and
receiving, by the terminal device, first indication information, the first indication information being used to determine a resource used for transmission of the common channel or signal in the first cell.

2. The method of claim 1, wherein
the one or more configuration information comprise N resource configuration information, N being a positive integer; or
the one or more configuration information comprise M resource configuration information groups associated with M cells, each of the M resource configuration information groups being used to configure a resource for transmission of a common channel or signal in a cell, wherein the first resource configuration information group in the M resource configuration information groups comprises N resource configuration information, M and N being positive integers;
wherein each of the N resource configuration information is used to configure a resource for transmission of a common channel or signal in the first cell, and the N resource configuration information comprises the first resource configuration information.

3. The method of claim 2, wherein the first indication information being used to determine the resource used for transmission of the common channel or signal in the first cell, comprises:
the first indication information being used to determine the first resource configuration information from the N resource configuration information, the first resource configuration information being used to determine the resource used for transmission of the common channel or signal in the first cell.

4. The method of claim 3, wherein the first indication information is carried in a first downlink control information (DCI) format.

5. The method of claim 4, wherein
the one or more configuration information is further used to determine first DCI format configuration information, and the first DCI format configuration information is used to determine one or more of the following:
configuration of the first DCI format;
a first search space set associated with the first DCI format;
a time-domain position of the first search space set;
a control resource set associated with the first search space set;
a number of information bits in the first DCI format;
a first radio network temporary identity (RNTI) associated with the first DCI format;
an association relationship between the first cell and the first indication information; or
a start location where the first indication information is located in the first DCI format.

6. The method of claim 4 or 5, wherein receiving, by the terminal device, the first indication information comprises:
receiving, by the terminal device, the first indication information based on the first DCI format configuration information.

7. The method of any one of claims 4 to 6, wherein a start location of a valid duration of the first resource configuration information is determined by one of the following:
the start location being a start location of a first period in which the first DCI format is received;
the start location being an end location of a first period in which the first DCI format is received;
the start location being a start location of a next first period after the first DCI format is received;
the start location being a start location of a first slot after a first delay duration upon reception of the first DCI format;
the start location being a start location of a next first period after a first delay duration upon reception of the first DCI format;
the start location being indicated by the first DCI format; or
a time interval between the start location and a time-domain resource at which the first DCI format is received being pre-configured or predefined;
wherein the first period is a period associated with the first resource configuration information.

8. The method of any one of claims 4 to 7, wherein a length of a valid duration of the first resource configuration information is determined by one of the following:
the length being a pre-configured or predefined value;
the length being a pre-configured duration of a first timer; or
the length being indicated by the first DCI format.

9. The method of claim 8, wherein in a case of the length being indicated by the first DCI format, a length indicated by the first DCI format is a remaining duration of the valid duration of the first resource configuration information.

10. The method of any one of claims 4 to 9, wherein
when the one or more configuration information comprise M resource configuration information groups, the first DCI format comprises M indication information, wherein each indication information is used to determine a resource for transmission of a common channel or signal in a respective cell associated with the indication information.

11. The method of any one of claims 4 to 10, wherein
the N resource configuration information comprise one resource configuration information for determining that there is no resource for transmission of the common channel or signal in the first cell; or
the first indication information is further used to determine that there is no resource for transmission of the common channel or signal in the first cell; or
the first DCI format is further used to determine that there is no resource for transmission of the common channel or signal in the first cell.

12. The method of claim 3, wherein the first indication information is carried in a first medium access control (MAC) control element (CE) signaling.

13. The method of claim 12, wherein
a start location of a valid duration of the first resource configuration information is a start location of a valid duration of the first MAC CE signal; and/or
a length of a valid duration of the first resource configuration information is a pre-configured or predefined value.

14. The method of claim 8 or 13, wherein the length is in unit of one of the following:
length of a first period, slot, subframe, half-frame, frame, millisecond, or second; and
the first period is a period associated with the first resource configuration information.

15. The method of claim 12 or 13, wherein
when the one or more configuration information comprise M resource configuration information groups, the first MAC CE signaling comprises M indication information, wherein each indication information is used to determine a resource for transmission of a common channel or signal in a respective cell associated with the indication information.

16. The method of claim 12 or 13, wherein
the N resource configuration information comprise one resource configuration information for determining that there is no resource for transmission of the common channel or signal in the first cell; or
the first indication information is further used to determine that there is no resource for transmission of the common channel or signal in the first cell; or
the first MAC CE signaling is further used to determine that there is no resource for transmission of the common channel or signal in the first cell.

17. The method of any one of claims 3 to 16, further comprising:
determining, by the terminal device, the resource used for transmission of the common channel or signal in the first cell based on the first resource configuration information.

18. The method of claim 1, wherein
the one or more configuration information further comprise cell discontinuous transmission (DTX) configuration information and/or cell discontinuous reception (DRX) configuration information of the first cell; or
the one or more configuration information comprise cell DTX configuration information and/or cell DRX configuration information of M cells, and the cell DTX configuration information and/or the cell DRX configuration information of the M cells comprises the cell DTX configuration information and/or the cell DRX configuration information of the first cell.

19. The method of claim 18, wherein the first indication information being used to determine the resource used for transmission of the common channel or signal in the first cell, comprises:
the first indication information being used to indicate to activate or deactivate the cell DTX configuration information and/or the cell DRX configuration information of the first cell, and an active or inactive state of the cell DTX configuration information and/or the cell DRX configuration information of the first cell is used to determine the resource used for transmission of the common channel or signal in the first cell; or
the first indication information being used to indicate that the first cell is shutdown.

20. The method of claim 19, wherein the first indication information is carried in a second DCI format.

21. The method of claim 20, wherein
the one or more configuration information is further used to determine second DCI format configuration information, and the second DCI format configuration information is used to determine one or more of the following:
configuration of the second DCI format;
a second search space set associated with the second DCI format;
a time-domain position of the second search space set;
a control resource set associated with the second search space set;
a number of information bits in the second DCI format;
a second RNTI associated with the second DCI format;
an association relationship between the first cell and the first indication information; or
a start location of the first indication information in the second DCI format.

22. The method of claim 21, wherein receiving, by the terminal device, the first indication information comprises:
receiving, by the terminal device, the first indication information based on the second DCI format configuration information.

23. The method of any one of claims 20 to 22, wherein a start location of a valid duration for activation or deactivation of the cell DTX configuration information and/or the cell DRX configuration information of the first cell is determined by one of the following:
the start location being a start location of a second period in which the second DCI format is received;
the start location being an end location of a second period in which the second DCI format is received;
the start location being a start location of a next second period after the second DCI format is received;
the start location being a start location of a first slot after a second delay duration upon reception of the second DCI format;
the start location being a start location of a next second period after a second delay duration upon reception of the second DCI format;
the start location being indicated by the second DCI format; or
a time interval between the start location and a time-domain resource at which the second DCI format is received being pre-configured or predefined;
wherein the second period is a period associated with the cell DTX configuration information and/or the cell DRX configuration information of the first cell.

24. The method of any one of claims 20 to 23, wherein a length of a valid duration for activation or deactivation of the cell DTX configuration information and/or the cell DRX configuration information of the first cell is determined by one of the following:
the length being a pre-configured or predefined value ;
the length being a pre-configured duration of a second timer; or
the length being determined based on the active or inactive state indicated by the first indication information.

25. The method of claim 24, wherein the length is in unit of one of the following:
length of a second period, slot, subframe, half-frame, frame, millisecond, or second; and
the second period is a period associated with the cell DTX configuration information and/or the cell DRX configuration information of the first cell.

26. The method of any one of claims 20 to 25, wherein
when the one or more configuration information comprise the cell DTX configuration information and/or the cell DRX configuration information of the M cells, the second DCI format comprises M indication information, wherein each indication information is used to activate or deactivate cell DTX configuration information and/or cell DRX configuration information of a respective cell associated with the indication information.

27. The method of any one of claims 20 to 26, wherein
the first indication information is further used to determine that there is no resource for transmission of the common channel or signal in the first cell; or
the second DCI format is further used to determine that there is no resource for transmission of the common channel or signal in the first cell.

28. The method of claim 19, wherein the first indication information is carried in a second MAC CE signaling.

29. The method of claim 28, wherein a start location of a valid duration for activation or deactivation of the cell DTX configuration information and/or the cell DRX configuration information of the first cell is a start location of a valid duration of the second MAC CE signaling.

30. The method of claim 28 or 29, wherein
when the one or more configuration information comprise the cell DTX configuration information and/or the cell DRX configuration information of the M cells, the second MAC CE signaling comprises M indication information, wherein each indication information is used to activate or deactivate cell DTX configuration information and/or cell DRX configuration information of a respective cell associated with the indication information.

31. The method of any one of claims 28 to 30, wherein
the first indication information is further used to determine that there is no resource for transmission of the common channel or signal in the first cell; or
the second MAC CE signaling is further used to determine that there is no resource for transmission of the common channel or signal in the first cell.

32. The method of any one of claims 19 to 31, further comprising:
when the first indication information indicates to activate or deactivate the cell DTX configuration information and/or the cell DRX configuration information of the first cell, determining, by the terminal device, the resource used for transmission of the common channel or signal in the first cell based on the active or inactive state of the cell DTX configuration information and/or the cell DRX configuration information of the first cell; or
when the first indication information indicates that the first cell is shut down, determining, by the terminal device, that there is no resource for transmission of the common channel or signal in the first cell.

33. The method of any one of claims 1 to 32, wherein the first resource configuration information at least comprises one or more of the following:
a period of the common channel or signal;
a time-domain position of the common channel or signal;
a frequency-domain of the common channel or signal;
a transmit power of the common channel or signal or a parameter for determining the transmit power;
an antenna port of the common channel or signal;
an antenna port or an index or a configuration index of a reference signal associated with the common channel or signal; or
Quasi-Co-Location (QCL) association relationship or transmission configuration indication (TCI) state indication for the common channel or signal.

34. The method of any one of claims 1 to 33, wherein the common channel or signal comprises one or two of the following:
a downlink common channel or signal; or
an uplink common channel or signal.

35. The method of claim 34, wherein the downlink common channel or signal at least comprises one or more of the following:
a synchronizing signal/PBCH block (SSB);
a system information block Type1 (SIB1);
one or more SIBs except SIB1;
a paging message;
a common physical downlink control channel (PDCCH); or
a channel state information reference signal (CRI-RS).

36. The method of claim 34, wherein the uplink common channel or signal at least comprises one or more of the following:
a physical random access channel (PRACH);
a message A (msgA);
a sounding reference signal (SRS); or
a common physical uplink control channel (PUCCH).

37. The method of any one of claims 1 to 36, wherein the one or more configuration information is acquired by the terminal device through system information.

38. A method for channel or signal transmission, comprising:
sending, by a network device, one or more configuration information to a terminal device, the one or more configuration information comprising first resource configuration information, and the first resource configuration information being used to configure a resource for transmission of a common channel or signal in a first cell; and
sending, by the network device, first indication information to the terminal device, the first indication information being used to determine a resource used for transmission of the common channel or signal in the first cell.

39. The method of claim 38, wherein
the one or more configuration information comprise N resource configuration information, N being a positive integer; or
the one or more configuration information comprise M resource configuration information groups associated with M cells, each of the M resource configuration information groups being used to configure a resource for transmission of a common channel or signal in a cell, wherein the first resource configuration information group in the M resource configuration information groups comprises N resource configuration information, M and N being positive integers;
wherein each of the N resource configuration information is used to configure a resource for transmission of a common channel or signal in the first cell, and the N resource configuration information comprises the first resource configuration information.

40. The method of claim 39, wherein the first indication information being used to determine the resource used for transmission of the common channel or signal in the first cell, comprises:
the first indication information being used to determine the first resource configuration information from the N resource configuration information, the first resource configuration information being used to determine the resource used for transmission of the common channel or signal in the first cell.

41. The method of claim 40, wherein the first indication information is carried in a first downlink control information (DCI) format.

42. The method of claim 41, wherein
the one or more configuration information is further used to determine first DCI format configuration information, and the first DCI format configuration information is used to determine one or more of the following:
configuration of the first DCI format;
a first search space set associated with the first DCI format;
a time-domain position of the first search space set;
a control resource set associated with the first search space set;
a number of information bits in the first DCI format;
a first radio network temporary identity (RNTI) associated with the first DCI format;
an association relationship between the first cell and the first indication information; or
a start location of the first indication information in the first DCI format.

43. The method of claim 41 or 42, wherein sending, by the network device, the first indication information to the terminal device comprises:
sending, by the network device, the first indication information to the terminal device based on the first DCI format configuration information.

44. The method of any one of claims 41 to 43, wherein a start location of a valid duration of the first resource configuration information is determined by one of the following:
the start location being a start location of a first period in which the first DCI format is received;
the start location being an end location of a first period in which the first DCI format is received;
the start location being a start location of a next first period after the first DCI format is received;
the start location being a start location of a first slot after a first delay duration upon reception of the first DCI format;
the start location being a start location of a next first period after a first delay duration upon reception of the first DCI format;
the start location being indicated by the first DCI format; or
a time interval between the start location and a time-domain resource at which the first DCI format is received being pre-configured or predefined;
wherein the first period is a period associated with the first resource configuration information.

45. The method of any one of claims 41 to 44, wherein a length of a valid duration of the first resource configuration information is determined by one of the following:
the length being a pre-configured or predefined value ;
the length being a pre-configured duration of a first timer; or
the length being indicated by the first DCI format.

46. The method of claim 45, wherein in a case of the length being indicated by the first DCI format, a length indicated by the first DCI format is a remaining duration of the valid duration of the first resource configuration information.

47. The method of any one of claims 41 to 46, wherein
when the one or more configuration information comprise M resource configuration information groups, the first DCI format comprises M indication information, wherein each indication information is used to determine a resource for transmission of a common channel or signal in a respective cell associated with the indication information.

48. The method of any one of claims 41 to 47, wherein
the N resource configuration information comprise one resource configuration information used to determine that there is no resource for transmission of the common channel or signal in the first cell; or
the first indication information is further used to determine that there is no resource for transmission of the common channel or signal in the first cell; or
the first DCI format is further used to determine that there is no resource for transmission of the common channel or signal in the first cell.

49. The method of claim 40, wherein the first indication information is carried in a first MAC CE signaling.

50. The method of claim 49, wherein
a start location of the valid duration of the first resource configuration information is a start location of a valid duration of the first MAC CE signal; and/or
a length of the valid duration of the first resource configuration information is a pre-configured or predefined value.

51. The method of claim 45 or 50,wherein the length is in unit of one of the following:
length of a first period, slot, subframe, half frame, frame, millisecond, or second; and
the first period is a period associated with the first resource configuration information.

52. The method of claim 49 or 50, wherein
when the one or more configuration information comprise M resource configuration information groups, the first MAC CE signaling comprises M indication information, wherein each indication information is used to determine a resource for transmission of a common channel or signal in a cell associated with the indication information.

53. The method of claim 49 or 50, wherein
the N resource configuration information comprise one resource configuration information for determining that there is no resource for transmission of the common channel or signal in the first cell; or
the first indication information is further used to determine that there is no resource for transmission of the common channel or signal in the first cell; or
the first MAC CE signaling is further used to determine that there is no resource for transmission of the common channel or signal in the first cell.

54. The method of claim 38, wherein
the one or more configuration information further comprise cell discontinuous transmission (DTX) configuration information and/or cell discontinuous reception (DRX) configuration information of the first cell; or
the one or more configuration information comprise cell DTX configuration information and/or cell DRX configuration information of M cells, and the cell DTX configuration information and/or the cell DRX configuration information of the M cells comprises the cell DTX configuration information and/or the cell DRX configuration information of the first cell.

55. The method of claim 54, wherein the first indication information being used to determine the resource used for transmission of the common channel or signal in the first cell, comprises:
the first indication information being used to indicate to activate or deactivate the cell DTX configuration information and/or the cell DRX configuration information of the first cell, and an active or inactive state of the cell DTX configuration information and/or the cell DRX configuration information of the first cell is used to determine the resource used for transmission of the common channel or signal in the first cell; or
the first indication information being used to indicate that the first cell is shutdown.

56. The method of claim 55, wherein the first indication information is carried in a second DCI format.

57. The method of claim 56, wherein
the one or more configuration information is further used to determine second DCI format configuration information, and the second DCI format configuration information is used to determine one or more of the following:
configuration of the second DCI format;
a second search space set associated with the second DCI format;
a time-domain position of the second search space set;
a control resource set associated with the second search space set;
a number of information bits in the second DCI format;
a second RNTI associated with the second DCI format;
an association relationship between the first cell and the first indication information; or
a start location of the first indication information in the second DCI format.

58. The method of claim 57, wherein sending, by the network device, the first indication information to the terminal device comprises:
sending, by the network device, the first indication information to the terminal device based on the second DCI format configuration information.

59. The method of any one of claims 56 to 58, wherein a start location of a valid duration for activation or deactivation of the cell DTX configuration information and/or the cell DRX configuration information of the first cell is determined by one of the following:
the start location being a start location of a second period in which the second DCI format is received;
the start location being an end location of a second period in which the second DCI format is received;
the start location being a start location of a next second period after the second DCI format is received;
the start location being a start location of a first slot after a second delay duration upon reception of the second DCI format;
the start location being a start location of a next second period after a second delay duration upon reception of the second DCI format; or
the start location being indicated by the second DCI format; or
a time interval between the start location and a time-domain resource at which the second DCI format is received being pre-configured or predefined;
wherein the second period is a period associated with the cell DTX configuration information and/or the cell DRX configuration information of the first cell.

60. The method of any one of claims 56 to 59, wherein a length of a valid duration for activation or deactivation of the cell DTX configuration information and/or the cell DRX configuration information of the first cell is determined by one of the following:
the length being a pre-configured or predefined value ;
the length being a pre-configured duration of a second timer; or
the length being determined based on the active or inactive state indicated by the first indication information.

61. The method of claim 60, wherein the length is in unit of one of the following:
length of a second period, slot, subframe, half frame, frame, millisecond, or second; and
the second period is a period associated with the cell DTX configuration information and/or the cell DRX configuration information of the first cell.

62. The method of any one of claims 56 to 61, wherein
when the one or more configuration information comprise the cell DTX configuration information and/or the cell DRX configuration information of the M cells, the second DCI format comprises M indication information, wherein each indication information is used to activate or deactivate cell DTX configuration information and/or cell DRX configuration information of a respective cell associated with the indication information.

63. The method of any one of claims 56 to 62, wherein
the first indication information is further used to determine that there is no resource for transmission of the common channel or signal in the first cell; or
the second DCI format is further used to determine that there is no resource for transmission of the common channel or signal in the first cell.

64. The method of claim 55, wherein the first indication information is carried in a second MAC CE signaling.

65. The method of claim 64, wherein a start location of a valid duration for activation or deactivation of the cell DTX configuration information and/or the cell DRX configuration information of the first cell is a start location of a valid duration of the second MAC CE signaling.

66. The method of claim 64 or 65, wherein
when the one or more configuration information comprise the cell DTX configuration information and/or the cell DRX configuration information of the M cells, the second MAC CE signaling comprises M indication information, wherein each indication information is used to activate or deactivate cell DTX configuration information and/or cell DRX configuration information of a respective cell associated with the indication information.

67. The method of any one of claims 64 to 66, wherein
the first indication information is further used to determine that there is no resource for transmission of the common channel or signal in the first cell; or
the second MAC CE signaling is further used to determine that there is no resource for transmission of the common channel or signal in the first cell.

68. The method of any one of claims 38 to 67, wherein the first resource configuration information at least comprise one or more of the following:
a period of the common channel or signal;
a time-domain position of the common channel or signal;
a frequency-domain of the common channel or signal;
a transmit power of the common channel or signal or a parameter for determining the transmit power;
an antenna port of the common channel or signal;
an antenna port or an index or a configuration index of a reference signal associated with the common channel or signal; or
Quasi-Co-Location (QCL) association relationship or transmission configuration indication (TCI) state indication for the common channel or signal.

69. The method of any one of claims 38 to 68, wherein the common channel or signal comprises one or two of the following:
a downlink common channel or signal; or
an uplink common channel or signal.

70. The method of claim 69, wherein the downlink common channel or signal at least comprises one or more of the following:
a synchronization signal/PBCH block (SSB);
a system information block Type1 (SIB1);
one or more SIBs except SIB1;
a paging message;
a common physical downlink control channel (PDCCH); or
a channel state information reference signal (CRI-RS).

71. The method of claim 69, wherein the uplink common channel or signal at least comprises one or more of the following:
a physical random access channel (PRACH);
a message A (msgA);
a sounding reference signal (SRS); or
a common physical uplink control channel (PUCCH).

72. The method of any one of claims 38 to 71, wherein the one or more configuration information is configured by the network device through system information.

73. A terminal device, comprising:
a first communication unit, configured to acquire one or more configuration information, the one or more configuration information comprising first resource configuration information, and the first resource configuration information being used to configure a resource for transmission of a common channel or signal in a first cell;
the first communication unit being further configured to receive first indication information, the first indication information being used to determine a resource for transmission of the common channel or signal in the first cell.

74. A network device, comprising:
a first communication unit, configured to send one or more configuration information to a terminal device, the one or more configuration information comprising first resource configuration information, and the first resource configuration information being used to configure a resource for transmission of a common channel or signal in a first cell;
the first communication unit being further configured to send first indication information to the terminal device, the first indication information being used to determine a resource used for transmission of the common channel or signal in the first cell.

75. A terminal device, comprising a processor, and a memory for storing a computer program, wherein the processor is configured to invoke and execute the computer program stored in the memory to perform the method of any one of claims 1 to 37.

76. A network device, comprising a processor, and a memory for storing a computer program, wherein the processor is configured to invoke and execute the computer program stored in the memory to perform the method of any one of claims 38 to 72.

77. A chip, comprising a processor configured to invoke and execute a computer program from a memory, to cause a device on which the chip is mounted to perform the method of any one of claims 1 to 15 or the method of any one of claims 38 to 72.

78. A computer readable storage medium, for storing computer program, which cause a computer to perform the method of any one of claims 1 to 37 or the method of any one of claims 38 to 72.

79. A computer program product, comprising computer program instructions, which cause a computer to perform the method of any one of claims 1 to 37 or the method of any one of claims 38 to 72.

80. A computer program, which cause a computer to perform the method of any one of claims 1 to 37 or the method of any one of claims 38 to 72.
